# FASCICULE DE BREVET EUROPEEN

(11) **EP 3 178 202 B1**
(45) Date de publication et mention de la délivrance du brevet: **02.05.2018**
(21) Numéro de dépôt: 15736455.5
(22) Date de dépôt: 08.07.2015
(51) Int. Cl.: H04L 12/703, H04L 12/28, H04L 12/24, H04L 12/54, H04L 12/707

(54) **DISPOSITIF DOMOTIQUE À LIAISON DE COMMUNICATION ALTERNATIVE AVEC UN SERVEUR INFORMATIQUE DISTANT**
DOMOTIKVORRICHTUNG MIT EINER ALTERNATIVEN KOMMUNIKATIONSVERBINDUNG MIT EINEM ENTFERNTEN COMPUTERSERVER
HOME AUTOMATION DEVICE HAVING AN ALTERNATIVE COMMUNICATION LINK WITH A REMOTE COMPUTER SERVER

(30) Priorité: 08.08.2014 FR 1457719
(43) Date de publication de la demande: 14.06.2017
(73) Titulaire: Somfy Protect by Myfox, 31670 Labège (FR)
(72) Inventeur: PRUNET, Jean-Marc, F-75007 Paris (FR); BACOU, Stéphane, F-31320 Castanet-Tolosan (FR); PREVOST, Emmanuel, F-92240 Malakoff (FR)
(74) Mandataire: Lavoix
(86) Numéro de dépôt international: PCT/EP2015/065604
(87) Numéro de publication internationale: WO 2016/020132

(56) Documents cités:
- FR-A1- 2 962 869
- US-A1- 2003 088 698
- US-A1- 2009 036 159
- US-A1- 2011 066 875

## Description

L'invention concerne un dispositif domotique comprenant au moins deux centrales domotiques, une telle centrale domotique, un procédé mis en oeuvre dans une telle centrale domotique et dans un tel dispositif domotique, permettant d'assurer une liaison de communication redondante entre une centrale domotique et un dispositif récepteur.

De nombreuses applications domotiques requièrent, pour des raisons de sûreté ou de commodité, qu'une centrale domotique soit en permanence accessible par des liaisons de télécommunications, soit pour pouvoir en contrôler l'état, soit pour pouvoir recevoir des notifications de ce dispositif. En particulier, dans le cas d'une centrale domotique d'alarme, un utilisateur souhaite être immédiatement informé d'un incident survenu dans un local surveillé tel que son domicile par exemple.

De nombreux dispositifs domotiques sont reliés à une interface utilisateur à travers le réseau Internet. Plus particulièrement, de nombreux dispositifs domotiques font partie d'un réseau local d'appareils électroniques, tous reliés par un routeur unique au réseau Internet (cf. par exemple US 2009/0036159). Cependant, ce modèle de connexion pose le problème de la panne de réseau Internet qui coupe la liaison de télécommunication entre utilisateur et dispositif domotique. Une telle panne peut avoir de multiples origines, techniques ou frauduleuses, sur une ligne réseau ou sur le routeur du réseau local, y compris des coupures d'alimentation électrique. En particulier, dans le cas d'une centrale domotique de surveillance de locaux et/ou d'objets, une coupure de la liaison entre centrale domotique et utilisateur via l'Internet peut être mal intentionnée.

C'est pourquoi, certains dispositifs domotiques sont adaptés pour pouvoir communiquer sur un réseau de type téléphone mobile, par exemple GSM, en tant que liaison de télécommunication de secours en cas de coupure de l'accès au réseau Internet.

Néanmoins, ce type de solution est coûteux pour l'utilisateur. En effet, cela nécessite parfois d'acheter un dispositif supplémentaire permettant un relais sur le réseau GSM, voire une antenne additionnelle de communication sur ce réseau. De plus, un utilisateur doit acheter un accès sur ce réseau, qui est souvent un abonnement mensuel, alors que la probabilité d'utiliser ce réseau de secours est très faible, et en tout état de cause très occasionnel.

L'invention vise donc à pallier ces inconvénients.

L'invention vise à proposer un dispositif domotique assurant une liaison de télécommunication redondante entre une centrale domotique et un dispositif récepteur.

L'invention vise notamment à proposer un tel dispositif domotique fiable et résistant à une panne de connexion par le réseau Internet entre une centrale domotique et un dispositif récepteur.

L'invention vise également une telle centrale domotique.

L'invention vise à proposer une telle centrale qui est économique à l'usage.

L'invention vise plus particulièrement une telle centrale qui est fiable.

L'invention vise en outre à proposer une telle centrale qui est autonome énergétiquement.

L'invention vise en outre un procédé mis en oeuvre par un tel dispositif permettant un fonctionnement fiable d'une telle centrale.

L'invention vise aussi un procédé mis en oeuvre par une telle centrale dans un tel dispositif, adapté pour que la centrale soit simple à installer, à configurer et à utiliser.

L'invention concerne donc un dispositif domotique comprenant :
- une première centrale domotique, dite centrale principale,
- un dispositif électronique, dit dispositif récepteur relié à ladite centrale principale par une première liaison de communication de données, dite liaison principale,
- ladite centrale principale appartenant à un premier réseau local, dit réseau local principal, de dispositifs électroniques distincts et distants du dispositif récepteur, ce réseau local principal disposant d'un accès propre par mot de passe au réseau Internet, ladite liaison principale comprenant une liaison de communication du réseau Internet,
ladite centrale principale étant adaptée pour :
- recevoir des signaux, dits signaux domotiques, d'au moins un capteur domotique,
- traiter lesdits signaux domotiques et produire des données numériques représentatives d'un message, dit message domotique, en fonction desdits signaux domotiques,
- pouvoir émettre ledit message domotique audit dispositif récepteur par ladite liaison principale,
caractérisé en ce qu'il comprend une deuxième centrale domotique, dite centrale voisine, appartenant à un deuxième réseau local, dit réseau local voisin, de dispositifs électroniques distincts et distants du dispositif récepteur, ce réseau local voisin disposant d'un accès propre par mot de passe au réseau Internet, ladite liaison voisine comprenant une liaison de communication du réseau Internet,
en ce que ledit dispositif récepteur est relié à ladite centrale voisine par une deuxième liaison de communication de données, dite liaison voisine, distincte de la liaison principale,
et en ce que ladite centrale principale est adaptée pour :
- pouvoir détecter une coupure de ladite liaison principale,
- pouvoir établir une liaison de communication de données, dite liaison translocale :
   - distincte de ladite liaison principale,
   - distincte de ladite liaison voisine,
   - avec ladite centrale voisine,
- sur détection d'une coupure de ladite liaison principale, pouvoir réémettre ledit message domotique à ladite centrale voisine, par ladite liaison translocale,
et en ce que ladite centrale voisine est adaptée pour :
- pouvoir recevoir, sur ladite liaison translocale, ledit message domotique de ladite centrale principale,
- pouvoir émettre ledit message domotique audit dispositif récepteur par ladite liaison voisine sans lire ni extraire le contenu dudit message domotique.

Un dispositif domotique selon l'invention est notamment un ensemble de matériels électroniques et/ou informatiques, de logiciels, d'informations sous forme de données numériques organisées en fichiers et/ou en bases de données, et de liaisons de communications de données analogiques et/ou numériques entre lesdits matériels, apte à réaliser des fonctions prédéterminées.

Un dispositif selon l'invention comprend avantageusement une pluralité de centrales domotiques selon l'invention, c'est-à-dire une pluralité de centrales domotiques reliées entre elles par des liaisons translocales. Ainsi, avantageusement et selon l'invention, lesdites centrales domotiques forment un réseau de télécommunications basé sur lesdites liaisons translocales, notamment un réseau de télécommunications de machine à machine. Plus particulièrement, les centrales domotiques selon l'invention sont adaptées pour former un réseau de communication ad hoc.

Avantageusement et selon l'invention, ladite liaison translocale permet une liaison directe entre ladite centrale principale et ladite centrale voisine, c'est-à-dire une liaison de communication sans dispositif intermédiaire de relais entre ladite centrale principale et ladite centrale voisine.

Des appareils électroniques ayant des fonctions distinctes et une conception distincte d'une centrale domotique selon l'invention, peuvent avantageusement communiquer entre eux ou avec cette centrale domotique via ladite liaison translocale.

Plus particulièrement, des centrales domotiques d'un dispositif domotique selon l'invention peuvent assurer, à titre principal, des fonctions très différentes les unes des autres (par exemple surveillance de locaux, géolocalisation d'objets, gestion du conditionnement d'air, gestion des ouvertures, etc.), tout en étant capables de transmettre, via ladite liaison translocale, des messages domotiques reçus d'une autre centrale domotique de type différent.

L'invention concerne aussi une centrale domotique, dite centrale principale, adaptée pour :
- recevoir des signaux, dits signaux domotiques, d'au moins un capteur domotique,
- traiter lesdits signaux domotiques et produire des données numériques représentatives d'un message, dit message domotique, en fonction desdits signaux domotiques,
- pouvoir émettre ledit message domotique à un dispositif récepteur par une première liaison de communication de données, dite liaison principale, comprenant une liaison de communication du réseau Internet, ladite centrale principale appartenant à un premier réseau local, dit réseau local principal, de dispositifs électroniques distincts et distants du dispositif récepteur, ce réseau local principal disposant d'un accès propre par mot de passe au réseau Internet, caractérisée en ce qu'elle est adaptée pour :
- pouvoir détecter une coupure de ladite liaison principale,
- pouvoir établir une liaison de communication de données, dite liaison translocale :
   - distincte de la liaison principale,
   - avec une deuxième centrale domotique, dite centrale voisine, adaptée pour pouvoir émettre ledit message domotique audit dispositif récepteur, sans lire ni extraire le contenu dudit message domotique, par une deuxième liaison de communication de données, dite liaison voisine comprenant une liaison de communication du réseau Internet, distincte de la liaison principale et de la liaison translocale, ladite centrale voisine appartenant à un deuxième réseau local, dit réseau local voisin, de dispositifs électroniques distincts et distants du dispositif récepteur, ce réseau local voisin disposant d'un accès propre par mot de passe au réseau Internet,
   - sur détection d'une coupure de ladite liaison principale, pouvoir réémettre ledit message domotique à ladite centrale voisine, par ladite liaison translocale.

Une centrale domotique selon l'invention est un dispositif électronique ayant des fonctions domotiques. Une centrale domotique selon l'invention est adaptée pour assurer une surveillance de locaux tel qu'un domicile, une entreprise, par exemple un entrepôt, une zone de bureaux, etc. Elle reçoit notamment des signaux de capteurs domotiques permettant de surveiller lesdits locaux, et émet des messages d'alarme ou d'alerte à des utilisateurs ou à des dispositifs d'alerte (une sirène par exemple). Ainsi, une telle centrale domotique assure par exemple une fonction d'alarme anti-intrusion et permet de déclencher des alarmes ou de prévenir une personne prédéfinie sur détection d'une intrusion dans lesdits locaux surveillés.

Avantageusement et selon l'invention, la centrale voisine et la centrale principale selon l'invention ont au moins en commun la capacité de communiquer entre elles directement, notamment de s'envoyer des messages domotiques, via ladite liaison translocale, ce quelles que soient les fonctions domotiques qu'elles assurent respectivement.

La centrale voisine et la centrale principale ont donc en commun des fonctions principales conformes à l'invention leur permettant d'échanger des messages domotiques via la dite liaison translocale. Dans tout le texte, les caractéristiques décrites relatives à la centrale principale sont donc aussi applicables à chaque centrale voisine, et vice-versa. La catégorisation en « principale » ou « voisine » d'une centrale domotique selon l'invention résulte uniquement d'un parti pris de point de vue.

Les centrales domotiques principale et voisine selon l'invention sont dans certains cas similaires, voire identiques, parfois identiques à des différences près liées à l'évolution technologique et/ou économique de composants électroniques, et/ou à des différences près liées à l'évolution d'un logiciel de fonctionnement.

En particulier, avantageusement et selon l'invention, ladite centrale voisine est en outre adaptée pour :
- pouvoir détecter une coupure de ladite liaison voisine,
- sur détection d'une coupure de ladite liaison voisine, pouvoir réémettre ledit message domotique à une autre centrale domotique par ladite liaison translocale.

L'autre centrale domotique peut être la centrale principale ou une centrale voisine autre que ladite centrale voisine qui réémet ledit message domotique par ladite liaison translocale.

De plus, avantageusement et selon l'invention, ladite centrale voisine est en outre adaptée pour :
a. recevoir des signaux, dits signaux domotiques, d'au moins un capteur domotique,
b. traiter lesdits signaux domotiques et produire des données numériques représentatives d'un message, dit message domotique, en fonction desdits signaux domotiques.

De plus, ladite centrale principale est avantageusement adaptée pour, sur réception d'un message domotique de ladite centrale voisine par ladite liaison translocale, réémettre ledit message domotique par ladite liaison principale.

Avantageusement, la centrale principale vérifie que sa liaison principale est fonctionnelle - notamment qu'elle n'est pas coupée - avant de réémettre par ladite liaison principale le message domotique de la centrale voisine audit dispositif récepteur.

Le réseau local voisin est disjoint du réseau local principal. En particulier, chaque réseau local domotique selon l'invention (principal ou voisin(s)) dispose d'un accès propre au réseau Internet, notamment dispose d'un routeur d'accès à l'Internet qui est propre à chaque réseau local selon l'invention.

Chaque réseau local dispose donc a priori d'une liaison de communication avec le dispositif récepteur, notamment avec un serveur informatique n'appartenant pas audit réseau local.

Avantageusement et selon l'invention ladite liaison principale et ladite liaison voisine sont des liaisons de télécommunications utilisant au moins pour partie le réseau Internet.

Dans certains modes de réalisation, avantageusement et selon l'invention :
- ladite centrale principale est reliée à un routeur d'accès Internet par une liaison locale de ladite liaison principale,
- ladite centrale voisine est reliée à un routeur d'accès Internet par une liaison locale de ladite liaison voisine.

Un réseau local selon l'invention comprend une pluralité d'appareils électroniques. Dans un réseau local selon l'invention, au moins l'un desdits appareils électroniques dispose d'un accès à l'Internet et le partage avec les autres appareils électroniques faisant partie dudit réseau local. Cet appareil est généralement un routeur. De plus, en général chaque appareil électronique dudit réseau local doit contenir en mémoire un mot de passe déterminé pour ce réseau local pour pouvoir utiliser l'accès à l'Internet de ce réseau local.

Les appareils d'un réseau local sont généralement situés dans un même local ou groupe de locaux (maison individuelle ou appartement par exemple) et sont reliés par fil ou sans fil (Wi-Fi® par exemple) à un routeur fournissant un accès à l'Internet. Un réseau local correspond donc généralement au réseau local d'un foyer ou d'une entreprise.

Le réseau local voisin est souvent constitué de façon similaire au réseau local principal. Néanmoins, rien n'empêche, conformément à l'invention que le réseau local diffère du réseau local principal, par exemple par la nature de la liaison voisine et de la liaison principale. Ainsi, la liaison voisine peut être basée sur un réseau de télécommunications sans fil du type GPRS, UMTS, LTE et la liaison principale être basée sur un réseau de télécommunications filaire du type téléphonique-ADSL ou par fibres optiques.

L'invention s'applique avantageusement à une centrale domotique ne disposant pas de moyens d'accès propres au réseau Internet. Néanmoins l'invention s'applique aussi de façon avantageuse à une centrale domotique selon l'invention comprenant des moyens propres d'accès à l'Internet. En effet, si le routeur d'un réseau local peut tomber en panne et priver une centrale domotique d'accès à l'Internet, les moyens de communication de ladite centrale domotique directement sur l'Internet peuvent aussi être hors-service (par exemple parce qu'un abonnement GPRS, UMTS, LTE n'a pas été renouvelé).

Par ailleurs, chaque capteur domotique selon l'invention comprend avantageusement une liaison de communication de signaux domotiques avec une seule centrale domotique. Chaque capteur domotique est avantageusement adapté pour pouvoir communiquer avec une centrale domotique selon l'invention par une liaison de communication propre, filaire ou sans fil.

Le capteur domotique peut faire partie de la centrale domotique (par exemple être monté sur une carte électronique commune à une unité de traitement de donnée de la centrale domotique) ou être physiquement séparé de celle-ci.

Plus particulièrement, au moins l'un desdits capteur domotique dispose d'une liaison de communication sans fil, dite liaison domotique, avec ladite centrale domotique. Ladite liaison domotique est de portée optimale faible, par exemple inférieure à 1km, notamment inférieure à 500m, plus particulièrement inférieure à 100m en intérieur. Ainsi ladite liaison domotique est par exemple une liaison radiofréquences, par exemple selon une des normes IEEE 802.15.4, par exemple du type Zigbee®.

Avantageusement et selon l'invention, au moins un capteur domotique est choisi parmi : un détecteur incendie, un détecteur de mouvement, notamment un détecteur infrarouge, un détecteur d'ouverture d'ouvrant, un détecteur accélérométrique, un détecteur magnétométrique, une caméra, un microphone, un détecteur de coupure d'alimentation électrique, un détecteur de contact, un détecteur d'eau, un thermomètre, un luxmètre notamment un capteur photovoltaïque, un détecteur de gaz, notamment un détecteur de monoxyde de carbone, un détecteur de taux de dioxygène, un détecteur de dioxyde de carbone, un détecteur de taux de vapeur d'eau (capteur d'humidité), un détecteur sismique, un détecteur de bris de glace, un détecteur de panne ou de dysfonctionnement d'un dispositif électrique ou mécanique, un médaillon d'appel au secours ou d'assistance, un capteur de consommation d'eau, notamment un compteur d'eau, un capteur de consommation d'électricité, notamment un compteur d'électricité, un capteur de consommation de gaz, notamment un compteur de gaz, un capteur de consommation de carburant, un dispositif de localisation GPS, un tachymètre, un capteur de pression, un anémomètre, un capteur de surveillance d'une personne, notamment un capteur de rythme cardiaque, un capteur de pression sanguine, un capteur de saturation en dioxygène, un capteur de fréquence respiratoire, etc.

La centrale domotique est adaptée pour centraliser et traiter des signaux domotiques d'une pluralité de capteurs domotiques. La centrale domotique est adaptée pour produire des données représentatives de messages, dits messages domotiques, en fonction des signaux domotiques reçus d'un ou plusieurs capteurs domotiques. La centrale domotique est adaptée pour émettre un tel message domotique à destination d'un dispositif récepteur, c'est-à-dire que ledit message domotique comprend au moins une zone d'adresse, ladite zone d'adresse étant complétée par un identifiant dudit dispositif récepteur enregistré dans une mémoire de ladite centrale domotique.

Avantageusement et selon l'invention, ledit dispositif récepteur est avantageusement un serveur informatique. Le serveur informatique est généralement distant de chaque centrale domotique. En particulier le serveur informatique est généralement hors de portée sur des liaisons exclusivement sans fil, d'une majorité de centrales domotiques selon l'invention.

Le serveur informatique est par exemple un serveur informatique physique ou un réseau de serveurs informatiques dans le « cloud ».

Le serveur informatique est avantageusement un serveur informatique centralisant des échanges d'information :
- entre chaque centrale domotique selon l'invention et un dispositif électronique d'interface avec un utilisateur (ordinateur, appareil électronique mobile, etc.), et/ou
- entre centrales domotiques selon l'invention.

Le serveur informatique peut traiter de telles informations sous forme de données numériques.

Le serveur informatique comprend une mémoire dans laquelle sont enregistrées des informations relatives aux centrales domotiques selon l'invention.

Plus particulièrement, le serveur informatique comprend en mémoire une table de serveur dans laquelle sont enregistrés des identifiants d'une pluralité de centrales domotiques selon l'invention.

Ladite table de serveur comprend avantageusement en outre des informations relatives à chaque centrale domotique selon l'invention, par exemple leur géolocalisation. Leur géolocalisation peut être déterminée par le serveur informatique sur la base de l'adresse internet (adresse IP) du réseau local auquel ladite centrale domotique appartient, ou à partir d'une adresse liée à un abonnement de services liés audit dispositif (par exemple un service de télésurveillance dans le cas d'un dispositif d'alarme), ou encore sur la base d'une adresse renseignée par un utilisateur.

Ladite table de serveur du serveur informatique peut aussi comprendre une ou plusieurs clés de cryptage associées à chaque identifiant de centrale domotique.

Un réseau local voisin est généralement sécurisé et donc inaccessible à un dispositif électronique extérieur qui ne dispose pas de clé ou mot de passe lui permettant de se connecter. De tels réseau locaux sont donc voisins géographiquement mais fermés et sans échanges entre eux.

L'invention permet à une centrale domotique d'envoyer des messages domotiques audit dispositif récepteur à travers la liaison voisine du réseau local voisin, sans disposer d'autorisation particulière - notamment sans disposer de clé de cryptage ou de mot de passe du réseau local voisin - uniquement en envoyant des messages domotiques à ladite centrale voisine par ladite liaison translocale, ladite centrale voisine se chargeant de les transmettre via ladite liaison voisine car ladite centrale voisine appartient au réseau local voisin et est à ce titre autorisée à utiliser ladite liaison voisine.

L'invention permet à une centrale domotique selon l'invention possédant déjà une liaison de communication avec le réseau Internet, de disposer d'une liaison de communication alternative de machine à machine avec au moins une autre centrale domotique dotée de moyens de communication sur ladite liaison translocale et ayant aussi un accès au réseau Internet.

L'invention permet à une centrale domotique d'émettre des messages domotiques via une liaison à l'Internet d'un réseau local autre que le réseau local auquel elle appartient.

L'invention permet donc avantageusement d'offrir à une centrale domotique une possibilité de communiquer avec le serveur informatique, malgré une liaison principale hors-service entre le réseau local principal auquel elle appartient et le serveur informatique.

L'invention, permet ainsi à une centrale domotique de disposer d'une liaison de communication de secours avec le dispositif récepteur. Il s'agit en outre avantageusement d'une liaison de secours gratuite, de centrale principale à centrale voisine, sans utilisation d'un réseau de télécommunication existant nécessitant un abonnement et/ou entraînant une facturation quantitative, tel qu'un réseau de télécommunications GSM ou GPRS par exemple.

Avantageusement une centrale domotique selon l'invention est adaptée pour ne transmettre audit dispositif récepteur que des messages domotiques prédéterminés.

Avantageusement et selon l'invention ladite centrale principale est adaptée pour pouvoir réémettre ledit message domotique à ladite centrale voisine, par ladite liaison translocale, selon un protocole, dit protocole translocal domotique, de communication prédéterminé. Plus particulièrement, une centrale domotique selon l'invention est adaptée pour ne transmettre via ladite liaison translocale que des messages domotiques de format prédéterminé.

De plus, avantageusement et selon l'invention, sur réception d'un message domotique par ladite liaison translocale, ladite centrale voisine est adaptée pour transmettre audit dispositif récepteur, par ladite liaison voisine, ledit message domotique uniquement si ledit message domotique est établi selon le protocole translocal domotique.

Ainsi, conformément à l'invention seuls des messages domotiques de format prédéterminé peuvent transiter par ladite liaison voisine entre ladite centrale principale et ledit dispositif récepteur.

Dans certains modes de réalisation de l'invention, la centrale voisine est adaptée pour transmettre ledit message domotique audit dispositif récepteur, par ladite liaison voisine, uniquement s'il correspond à un élément d'une liste, dite liste autorisée, comprenant une pluralité de messages domotiques types prédéterminés autorisés à être transmis via ladite liaison voisine. Ladite liste autorisée comprend des messages domotiques types, par exemple « porte ouverte », « température réfrigérateur basse », « détection intrusion », etc. Ladite liste autorisée est avantageusement mémorisée dans une mémoire de la centrale voisine.

Les messages domotiques de ladite centrale principale peuvent transiter par le réseau local voisin et la liaison voisine, mais ils ne peuvent pas être transmis à d'autres appareils du réseau local voisin que la centrale voisine et les appareils situés sur la liaison voisine entre ladite centrale voisine et le serveur informatique.

En outre, dans un dispositif selon l'invention, ladite centrale principale crypte avantageusement au moins une partie d'un message domotique à destination du dispositif récepteur avec une clé de cryptage qui n'est pas détenue par ladite centrale voisine.

Ainsi, avantageusement et selon l'invention, un tunnel de communication est établi entre ladite centrale principale et ledit dispositif récepteur, sans qu'un message domotique puisse en être extrait, par exemple par ladite centrale voisine et sans qu'il puisse en sortir, par exemple à destination d'un appareil du réseau local voisin. En particulier, ni un appareil du réseau local voisin, ni ladite centrale voisine ne peut lire le contenu des messages domotiques échangés entre la centrale principale et le dispositif récepteur via ledit réseau local voisin.

En particulier, ladite centrale principale crypte avantageusement le contenu informatif (corps) du message. En particulier, avantageusement et selon l'invention ladite centrale principale est adaptée pour crypter un corps du message domotique avec une clé dont le dispositif récepteur dispose mais dont la centrale voisine ne dispose pas. Ainsi, ladite centrale voisine ne peut pas extraire l'information contenue dans ledit message domotique de ladite centrale principale.

Une centrale domotique selon l'invention crypte par exemple le contenu informatif (ou corps) du message avec un protocole de cryptage du type RSA ou AES.

Avantageusement et selon l'invention, il est ainsi impossible pour une centrale domotique selon l'invention d'accéder à un réseau local voisin, de déterminer quels sont les appareils électroniques qui font partie dudit réseau local voisin, de connaître la nature et/ou le nombre de capteurs domotiques reliés à la centrale voisine, etc. De même, il est impossible pour une centrale domotique selon l'invention d'extraire des informations d'un message domotique transitant par elle via ladite liaison translocale. De même il est impossible pour une centrale domotique selon l'invention de diffuser des données à destination d'un ou plusieurs appareils du réseau local voisin.

Plus particulièrement, un message domotique émis par ladite centrale principale sur ladite liaison translocale selon ledit protocole translocal domotique ne peut pas être représentatif d'une demande d'information concernant ladite centrale voisine ou le réseau local voisin. En outre, dans certains modes de réalisation de l'invention, seuls certains types de messages peuvent transiter par le réseau local voisin. Ainsi, le passage de messages domotiques issus de ladite centrale principale, par la liaison voisine, est limité à certains types de messages, par exemple des messages d'alerte d'un utilisateur dans le cas d'une centrale domotique d'alarme assurant une fonction de surveillance d'un local.

Néanmoins, en fonction du type de liaison translocale - notamment en fonction du débit de données de ladite liaison translocale -, rien n'empêche de prévoir que l'ensemble des fonctionnalités de la centrale principale puisse être accessible à travers ladite liaison translocale et ladite liaison voisine. En particulier des échanges bidirectionnels entre centrale principale et serveur informatique peuvent être prévus. Plus particulièrement, des instructions de contrôle d'un utilisateur envoyées au serveur informatique peuvent être communiquées à ladite centrale principale. Ces instructions de contrôle peuvent par exemple être encapsulées dans le corps d'un message domotique. Néanmoins ces messages domotiques, dans un sens comme dans l'autre sont contenu dans un tunnel à travers le réseau local voisin, de sorte qu'ils ne peuvent ni en sortir, ni en être extrait.

Par ailleurs, avantageusement et selon l'invention, ledit serveur informatique est adapté pour pouvoir communiquer par un réseau de télécommunications avec au moins un dispositif d'interface avec un utilisateur humain.

L'utilisateur d'un dispositif d'interface est par exemple l'utilisateur d'un réseau local, en particulier d'une centrale domotique selon l'invention appartenant à ce réseau local. L'utilisateur d'un dispositif d'interface peut aussi être différent de l'utilisateur de ladite centrale domotique : il s'agit par exemple d'un employé d'une société de télésurveillance.

Par ailleurs, ledit dispositif récepteur selon l'invention peut être un dispositif d'interface avec un utilisateur humain. Dans ce cas, avantageusement, ladite centrale principale émet ledit message domotique directement à destination dudit dispositif d'interface, sans passage par un serveur informatique.

Un dispositif d'interface avec un utilisateur humain est un dispositif électronique d'interface homme/machine, par exemple un téléphone mobile ou une tablette électronique relié(e) au serveur informatique par un réseau de télécommunications de données (par exemple GPRS).

Ledit dispositif électronique d'interface est avantageusement adapté pour établir une communication bidirectionnelle avec ladite centrale principale, via ledit serveur informatique. Ainsi, un utilisateur peut recevoir des informations sur le statut d'au moins un paramètre domotique surveillé ou collecté par ladite centrale principale : par exemple un message d'alarme relatif à une intrusion ou à un incendie détecté par un capteur domotique relié à ladite centrale principale.

De plus, un utilisateur peut aussi contrôler ladite centrale principale à distance, à travers ledit serveur informatique et ladite liaison principale avec le réseau local principal ou à travers ledit serveur informatique et une liaison voisine puis la liaison translocale entre au moins une centrale voisine et ladite centrale principale.

Grâce à un dispositif selon l'invention, un utilisateur, dit utilisateur principal, de la centrale principale reçoit des messages de ladite centrale principale sur un dispositif d'interface, même en cas de dysfonctionnement de la liaison principale entre ladite centrale principale et le serveur informatique. Cela est avantageusement entièrement transparent pour chaque utilisateur, dit utilisateur voisin, d'une centrale voisine qui transfère les messages de la centrale principale audit dispositif récepteur.

Ladite centrale domotique comprend avantageusement une alimentation de secours. Une alimentation de secours comprend par exemple un ou plusieurs des éléments suivants seul ou en combinaison : une batterie, un panneau photovoltaïque, etc.

Dans les réseaux informatiques, la coupure ou le dysfonctionnement de ladite liaison principale est notamment détecté par la centrale principale par l'absence de retour d'information après un délai prédéterminé.

Ainsi, avantageusement, dans un procédé selon l'invention, ladite centrale principale :
- émet un message domotique à destination d'un dispositif récepteur via ladite liaison principale, et déclenche un chronomètre,
- compare la valeur dudit chronomètre avec une valeur représentative d'un délai, dit délai d'attente, prédéterminé,
- réémet ledit message domotique via ladite liaison translocale si le délai d'attente est écoulé sans message d'accusé de réception dudit dispositif récepteur.

Avantageusement et selon l'invention, ladite centrale voisine est adaptée pour recevoir un message d'accusé de réception dudit dispositif récepteur et le transmettre à ladite centrale principale par ladite liaison translocale.

Ainsi, avantageusement, dans un procédé selon l'invention, lorsque ladite centrale principale :
- émet un message domotique à destination d'un dispositif récepteur, à une première centrale voisine via ladite liaison translocale, elle déclenche un chronomètre, puis
- compare la valeur dudit chronomètre avec une valeur représentative d'un délai prédéterminé,
- réémet ledit message domotique à une deuxième centrale voisine via ladite liaison translocale si la durée d'attente est écoulée sans message d'accusé de réception dudit dispositif récepteur.

Ladite centrale principale envoie successivement son message domotique via ladite liaison translocale à chaque centrale voisine dont elle dispose de l'identifiant dans une table de routage jusqu'à ce qu'un accusé de réception du dispositif récepteur lui soit retourné, ou jusqu'à ce qu'elle atteigne la fin de sa table de routage. Si elle atteint la fin de la table de routage, elle la re-parcourt jusqu'à recevoir un accusé de réception.

De plus, avantageusement, dans un dispositif selon l'invention ladite centrale principale est adaptée pour, sur réception d'un message domotique de ladite centrale voisine par ladite liaison translocale, et sur détection d'une coupure de ladite liaison principale, réémettre ledit message domotique par ladite liaison translocale à une deuxième centrale voisine.

En particulier, une centrale selon l'invention est avantageusement adaptée pour, sur réception d'un message domotique de ladite centrale voisine par ladite liaison translocale, et sur détection d'une coupure de ladite liaison principale, réémettre ledit message domotique par ladite liaison translocale à une deuxième centrale voisine.

Plus particulièrement, ladite centrale principale est adaptée pour, sur réception d'un message domotique de ladite centrale voisine par ladite liaison translocale, et sur détection d'une coupure de ladite liaison principale, réémettre ledit message domotique par ladite liaison translocale à une deuxième centrale voisine :
- appartenant à un deuxième réseau local voisin,
- adaptée pour pouvoir émettre des signaux représentatifs d'un message domotique à destination dudit dispositif récepteur par une deuxième liaison voisine.

L'invention permet de surmonter les cas d'avaries sur les réseaux Internet et/ou électriques de tout un édifice, voire de tout un quartier. En effet, l'invention permet de transmettre des données par transferts successifs (« sauts ») d'un message domotique de centrale domotique en centrale domotique jusqu'à au moins une centrale domotique dont la liaison de communication avec le dispositif récepteur est fonctionnelle. Ce(s) centrale(s) domotique(s) selon l'invention située(s) en bordure de la zone privée de liaison(s) principale(s) avec le serveur informatique permet(tent) donc à toutes les centrales domotiques selon l'invention de la zone privée de liaison(s) principale(s) de communiquer avec le serveur informatique.

Un réseau alternatif de télécommunications directes entre centrales domotiques est ainsi créé. Plus particulièrement, une pluralité de centrales domotiques selon l'invention forment avantageusement un réseau ad hoc.

Avantageusement et selon l'invention, ladite liaison translocale est une liaison de communication sans fil.

Ainsi, une centrale principale peut établir une liaison translocale de communication avec une centrale voisine sans matériel particulier et sans installation supplémentaire entre le réseau local principal et le réseau local voisin.

Avantageusement, la centrale principale établit une liaison translocale de communication avec chaque centrale voisine de façon automatisée, sans action particulière de l'utilisateur. Ainsi une centrale domotique selon l'invention est simple à installer et à configurer.

Avantageusement et selon l'invention, ladite liaison translocale est une liaison de télécommunication fonctionnant sur une technologie de télécommunications sans fil de portée maximale supérieure à la portée maximale du réseau local principal.

En particulier, la liaison translocale fonctionne avantageusement sur une technologie de télécommunications de portée maximale supérieure à la portée maximale actuelle du Wi-Fi® (norme IEEE 802.1 1x). En effet, la plupart des réseaux locaux utilisent actuellement des liaisons Wi-Fi® ; c'est notamment le cas des réseaux locaux du domicile de particuliers, dont la portée maximale en zone urbaine est inférieure à 100m.

En outre, la liaison translocale fonctionne avantageusement sur une technologie de télécommunications adaptée pour traverser des obstacles (tels que des murs) mieux que le Wi-Fi® tel que défini à ce jour. Ainsi, une liaison translocale selon l'invention fonctionne avantageusement sur une technologie de télécommunications ayant une portée d'au moins 500m en milieu urbain ou 1km en milieu rural, notamment d'au moins 1,5km en milieu urbain ou 5km en milieu rural, et plus particulièrement avantageusement d'au moins 3km en milieu urbain ou 10km en milieu rural.

Néanmoins, alternativement ou en combinaison, rien n'empêche de prévoir, dans certains modes de réalisation de l'invention, que la liaison translocale puisse fonctionner à l'aide d'un réseau sans fil de portée restreinte tel que le Wi-Fi®. Ainsi, cela peut être avantageux dans certaines zones densément équipées en centrales domotiques selon l'invention et/ou en cas d'avarie de la liaison de télécommunication spécifique de la liaison translocale.

De plus, avantageusement et selon l'invention, ladite liaison translocale est une liaison de communication cryptée.

Le cryptage de la liaison translocale met par exemple en oeuvre un procédé dans lequel deux centrales (principale et voisine ou voisines) échangent des clés de cryptage, directement par ladite liaison translocale et/ou via lesdites liaison principale et voisine par l'intermédiaire du serveur informatique qui contient avantageusement en mémoire au moins une clé de cryptage de la centrale principale et de chaque centrale voisine.

Ladite liaison translocale est par exemple cryptée par un protocole du type SSL/TLS.

Avantageusement et selon l'invention :
- ladite centrale principale comprend au moins une mémoire dans laquelle est stocké au moins un identifiant, dit identifiant principal, qui lui est propre,
- ladite centrale principale est adaptée pour pouvoir émettre un signal, dit signal de recherche, comprenant ledit identifiant principal, par ladite liaison translocale,
- ladite centrale voisine comprend au moins une mémoire dans laquelle est stocké au moins un identifiant, dit identifiant voisin, qui lui est propre,
- ladite centrale voisine est adaptée pour, sur réception dudit signal de recherche, émettre un signal, dit signal d'appairage, comprenant ledit identifiant voisin, par ladite liaison translocale,
- ladite centrale principale est adaptée pour, sur réception dudit signal d'appairage, enregistrer ledit identifiant voisin dans une mémoire.

Ledit identifiant principal et ledit identifiant voisin sont par exemple des identifiants de type adresse MAC.

Cela permet à une centrale domotique selon l'invention de découvrir et/ou d'établir un réseau de communication sur ladite liaison translocale avec les autres centrales domotiques à portée.

En outre, avantageusement et selon l'invention ladite centrale voisine est adaptée pour pouvoir émettre un signal de recherche comprenant en outre un identifiant voisin, par ladite liaison translocale. Avantageusement, ladite centrale principale comprend une pluralité d'identifiants voisins en mémoire et envoie un signal de recherche pour chaque identifiant voisin mémorisé. En particulier, ladite centrale voisine, envoie au moins un signal de recherche pour chaque identifiant voisin qu'elle reçoit d'un serveur informatique en réponse à un message d'inscription envoyé par ladite centrale principale audit serveur informatique.

De plus, avantageusement et selon l'invention,
- ladite centrale principale est adaptée pour, sur réception dudit signal de recherche, émettre un signal, dit signal d'appairage, comprenant ledit identifiant principal, par ladite liaison translocale,
- ladite centrale voisine est adaptée pour, sur réception dudit signal d'appairage, enregistrer ledit identifiant principal dans une mémoire.

Par ailleurs, la centrale domotique selon l'invention est aussi avantageusement caractérisée en ce qu'elle comprend au moins une mémoire adaptée pour pouvoir stocker une pluralité d'identifiants distincts de centrales voisines distinctes.

Plus particulièrement, ladite centrale principale est adaptée pour pouvoir enregistrer en mémoire une pluralité d'identifiants de centrales voisines sous forme de liste ou de table, dite table de routage. Chaque centrale domotique selon l'invention comprend avantageusement en mémoire une table de routage dans laquelle sont répertoriés tous les identifiants des centrales voisines à sa portée sur ladite liaison translocale, et avec lesquels elle a échangé son identifiant.

Alternativement ou en combinaison à l'émission d'un signal d'appairage sur la liaison translocale, rien n'empêche, dès lors que la liaison principale et la liaison voisine sont fonctionnelles, que la centrale voisine émette un signal d'appairage à destination de ladite centrale principale à travers la liaison voisine, le serveur informatique et la liaison principale, et non par ladite liaison translocale. Ainsi, le serveur informatique peut aussi joindre au signal d'appairage une clé de cryptage pour la communication de ladite centrale principale avec ladite centrale voisine.

Avantageusement et selon l'invention, la mémoire de la centrale principale est adaptée pour pouvoir stocker, avec chaque identifiant de chaque centrale voisine, une clé de cryptage à utiliser pour communiquer de façon sécurisée avec ladite centrale voisine, par ladite liaison translocale ou par ladite liaison principale et ladite liaison voisine.

Alternativement ou en combinaison, lors de l'installation d'une centrale principale, et notamment lors de sa connexion au réseau local principal, le serveur informatique détermine une géolocalisation basée sur l'adresse internet du réseau local principal, l'enregistre, et envoie à ladite centrale principale une liste d'identifiants de centrales voisines situées à proximité géographiquement de ladite centrale principale et théoriquement situées à portée de communication de ladite centrale principale par ladite liaison translocale. Ladite centrale principale émet alors un signal de recherche à destination de chaque centrale voisine de la liste fournie par le serveur informatique, c'est à dire qu'elle émet un signal de recherche comprenant en plus un identifiant de l'une des centrales voisines de la liste.

Avantageusement et selon l'invention, le signal d'appairage comprend en outre une valeur, dite valeur de qualité, représentative de la qualité de la liaison translocale entre ladite centrale principale et ladite centrale voisine. Sur réception dudit signal d'appairage, ladite centrale principale enregistre avantageusement ladite valeur de qualité de chaque centrale voisine, avec ledit identifiant voisin.

De plus, avantageusement et selon l'invention, la centrale principale est adaptée pour stocker en mémoire, avec chaque identifiant de chaque centrale voisine, une valeur de qualité de la liaison translocale avec cette centrale voisine. Cette valeur peut être basée sur l'un des critères suivants, pris seul ou en combinaison, de la connexion entre une centrale principale et une centrale voisine via ladite liaison translocale : force du signal, débit constaté de la liaison translocale, débit de la liaison voisine, intermittence de la liaison translocale ou de la liaison voisine, niveau d'autorisations d'accès à son réseau local voisin, valeurs de qualité des liaisons translocales de la centrale voisine avec les centrales voisines enregistrées dans sa propre mémoire, etc.

Avantageusement et selon l'invention, ladite centrale principale est adaptée pour enregistrer une pluralité d'identifiants sous forme de liste ou de table, avec un ordre de priorité. Ladite centrale principale établit un ordre de priorité des centrales voisines auxquelles émettre des signaux en cas de dysfonctionnement de la liaison principale. L'ordre de priorité est avantageusement basé sur la valeur de qualité, les centrales voisines disposant de la meilleur qualité de communication sur ladite liaison translocale avec ladite centrale principale étant contactées en premier par ladite centrale principale.

Avantageusement et selon l'invention, l'appairage est effectué directement entre centrale principale et centrale voisine sans que la centrale principale ne possède d'autorisation (clé de cryptage et/ou mot de passe) d'accès au réseau local voisin, notamment à la liaison voisine du réseau local voisin.

De plus, avantageusement et selon l'invention, la centrale principale est adaptée pour pouvoir effectuer périodiquement une actualisation des données de sa table de routage. Ainsi, la centrale principale envoie périodiquement un signal de recherche à chaque centrale voisine dont l'adresse est dans sa table de routage, afin de vérifier qu'ils sont toujours à portée de communication sur la liaison translocale, et afin d'actualiser la valeur de qualité associée à chaque identifiant de centrale voisine pour, le cas échéant, réarranger les ordres de priorité dans la table de routage.

Avantageusement et selon l'invention, ledit dispositif est en outre caractérisé en ce que :
- ladite centrale principale est adaptée pour pouvoir émettre un premier message, dit message d'inscription, à destination du serveur informatique via ladite liaison principale,
- ledit serveur informatique est adapté pour, sur réception dudit message d'inscription, produire et émettre à ladite centrale principale un message en réponse contenant au moins un identifiant, dit identifiant voisin, d'au moins une centrale voisine,
- ladite centrale principale est adaptée pour pouvoir émettre, par ladite liaison translocale, un signal, dit signal de recherche, comprenant :
   - au moins un identifiant, dit identifiant principal, qui lui est propre,
   - ledit identifiant voisin.

Ledit message d'inscription comprend par exemple un identifiant, dit identifiant principal, propre à ladite centrale principale.

Sur réception du message d'inscription, le serveur informatique enregistre avantageusement ledit identifiant principal en mémoire.

Le serveur informatique envoie un message de réponse audit message d'inscription à ladite centrale principale qui contient zéro, un ou plusieurs identifiant(s) voisin(s). Lesdits identifiants voisins envoyés par le serveur informatique à la centrale principale sont choisis en fonction de la géolocalisation de la centrale principale. Cette géolocalisation est soit déterminée par le serveur informatique, par exemple à partir de l'adresse IP du réseau local principal, ou encore par exemple à partir d'un numéro d'abonnement d'un utilisateur lié à son adresse postale. Des données de géolocalisation peuvent aussi être envoyées directement par la centrale principale au serveur informatique en fonction d'une géolocalisation qu'elle détermine (par exemple par un dispositif de positionnement par satellite intégré) ou qu'un utilisateur entre comme données d'entrée de la centrale principale.

Le serveur informatique enregistre avantageusement en mémoire la géolocalisation de ladite centrale principale en l'associant audit identifiant principal.

Ladite centrale principale émet avantageusement un signal de recherche à destination de chaque centrale voisine dont elle reçoit l'identifiant voisin dans une liste fournie transmise par le serveur informatique. Le serveur informatique envoie à ladite centrale principale une liste d'identifiants de centrales voisines en fonction d'une géolocalisation de la centrale principale. Ladite géolocalisation de la centrale principale est par exemple basée sur l'adresse internet du réseau local principal auquel appartient ladite centrale principale.

Une centrale principale selon l'invention comprend avantageusement une unité de traitement de données, notamment une unité de traitement de données numériques. L'unité de traitement comprend avantageusement au moins un microprocesseur.

Ladite unité de traitement est notamment adaptée pour enregistrer et lire des données dans une ou plusieurs mémoires de la centrale principale. En particulier, ladite unité de traitement comprend au moins une mémoire interne. La mémoire de l'unité de traitement est adaptée pour stocker des données représentatives d'instructions de fonctionnement de l'unité de traitement. Lesdites instructions permettent avantageusement à une unité de traitement selon l'invention de mettre en oeuvre un procédé selon l'invention.

Avantageusement, dans un dispositif domotique selon l'invention le serveur informatique (ou réseau de serveurs informatiques dans le « cloud ») est adapté pour permettre des échanges de messages domotiques entre un premier réseau de centrales domotiques fonctionnant avec un premier type de liaison translocale et/ou premier type de protocole domotique et un deuxième réseau de centrales domotiques fonctionnant avec un deuxième type de liaison translocale et/ou un deuxième type de protocole domotique. Ainsi, grâce à l'invention deux réseaux de télécommunication sur des liaisons translocales distincts peuvent être interconnectés, de sorte que l'extension d'un réseau de centrales domotiques pouvant échanger des messages domotique au sein d'un dispositif domotique selon l'invention est d'autant plus grande.

En particulier, le serveur informatique (ou réseau de serveurs informatiques) est adapté pour recevoir un message domotique établi selon un premier protocole de communication, extraire le contenu informatif dudit message domotique et le réémettre selon un deuxième protocole de communication distinct du premier protocole de communication. Avantageusement, le contenu informatif est encapsulé et crypté, par exemple selon un protocole du type RSA ou AES.

L'invention s'étend également à un procédé mis en oeuvre dans une centrale domotique, dite centrale principale, dans lequel ladite centrale principale :
- reçoit des signaux, dits signaux domotiques, d'au moins un capteur domotique,
- traite lesdits signaux domotiques et produit des données numériques représentatives d'un message, dit message domotique, en fonction desdits signaux domotiques,
- émet des signaux représentatifs d'un message, dit message domotique, à un dispositif récepteur par une première liaison de communication de données, dite liaison principale, comprenant une liaison de communication du réseau Internet, ladite centrale principale appartenant à un premier réseau local, dit réseau local principal, de dispositifs électroniques distincts et distants du dispositif récepteur, ce réseau local principal disposant d'un accès propre par mot de passe au réseau Internet,
caractérisé en ce que ladite centrale principale :
- détecte une coupure de ladite liaison principale,
- réémet ledit message domotique sur une liaison de communication de données, dite liaison translocale, distincte de la liaison principale, à une deuxième centrale domotique, dite centrale voisine, adaptée pour pouvoir émettre ledit message domotique audit dispositif récepteur par une deuxième liaison de communication de données, dite liaison voisine comprenant une liaison de communication du réseau Internet, distincte de la liaison principale sans lire ni extraire le contenu dudit message domotique ladite centrale voisine, appartenant à un deuxième réseau local, dit réseau local voisin, de dispositifs électroniques distincts et distants du dispositif récepteur, ce réseau local voisin disposant d'un accès propre par mot de passe au réseau Internet.

De plus, avantageusement et selon l'invention, ledit procédé est en outre caractérisé en ce que sur réception d'un message domotique d'une première centrale voisine via ladite liaison translocale, et sur détection d'une coupure de ladite liaison principale, ladite centrale principale réémet ledit message domotique à une deuxième centrale voisine via ladite liaison translocale.

Le procédé mis en oeuvre par la centrale principale et le procédé mis en oeuvre par chaque centrale voisine sont donc avantageusement conformes à l'invention. En particulier, le procédé de fonctionnement de la centrale principale est avantageusement similaire, et plus particulièrement identique, au procédé de fonctionnement de chaque centrale voisine.

L'invention s'étend également à un procédé mis en oeuvre par un dispositif domotique selon l'invention, notamment un procédé de fonctionnement d'un dispositif domotique selon l'invention.

L'invention s'étend à un programme d'ordinateur comprenant des instructions de code de programme pour l'exécution des étapes d'un procédé selon l'invention lorsque le programme est exécuté sur un ordinateur, notamment sur un dispositif électronique, et plus particulièrement sur une centrale domotique selon l'invention.

L'invention s'étend en particulier à un programme informatique comprenant des instructions pour l'exécution d'un procédé conforme à l'invention lorsque le programme est exécuté par un dispositif comprenant au moins une unité de traitement de données numériques, notamment par une centrale domotique conforme à l'invention.

L'invention s'étend à un support d'enregistrement sur lequel est enregistré un programme selon l'invention, ainsi qu'à un dispositif dans lequel un tel programme est enregistré, notamment une centrale domotique comprenant une mémoire dans laquelle un tel programme est enregistré.

L'invention s'étend également à un dispositif électronique, dit dispositif d'extension, comprenant :
- une unité de traitement de données numériques,
- une mémoire numérique,
- une antenne adaptée pour pouvoir émettre et recevoir des signaux sans fil sur une liaison, dite liaison translocale, de télécommunications,
- un port de connexion, ledit port de connexion étant adapté pour pouvoir échanger des données avec un port de connexion d'une centrale domotique.

Ledit dispositif d'extension permet de fournir des moyens de communiquer directement avec une autre centrale domotique sur ladite liaison translocale telle que définie précédemment, à une centrale domotique en étant initialement dépourvue. Ainsi, il suffit qu'une centrale domotique comprenne un port de connexion pour qu'elle puisse devenir une centrale domotique selon l'invention capable de communiquer sur un réseau ad hoc de centrales domotiques, notamment via des liaisons translocales comme définies ci-dessus.

Ledit dispositif d'extension est en outre adapté pour échanger des données numériques avec ladite centrale domotique lorsque ledit port de connexion est connecté à un port de connexion compatible d'une centrale domotique.

Ledit dispositif d'extension comprend avantageusement en mémoire des données représentatives d'instructions de code de programme pour l'exécution des étapes d'un procédé selon l'invention. De plus, ledit dispositif d'extension est adapté pour pouvoir transférer des données représentatives d'instructions de code de programme pour l'exécution des étapes d'un procédé selon l'invention vers une mémoire d'une centrale domotique, via ledit port de connexion.

Un port de connexion d'un dispositif d'extension selon l'invention peut être matériel sous la forme d'un connecteur à fiches conductrices d'électricité ou à fibres optiques. Un port de connexion d'un dispositif d'extension selon l'invention peut être logiciel, notamment lorsque ledit dispositif d'extension est adapté pour pouvoir échanger sans fil des données avec ladite centrale domotique.

Le dispositif d'extension est adapté pour recevoir des messages domotiques de ladite centrale domotique et les émettre sans fil sur ladite liaison translocale. Le dispositif d'extension peut être adapté pour modifier un message domotique reçu de ladite centrale domotique, de façon à ce que ledit message domotique soit construit conformément à un protocole prédéterminé tel que le protocole translocal domotique défini ci-dessus.

L'invention concerne également un dispositif domotique, une centrale domotique, un procédé mis en oeuvre dans un dispositif domotique, un procédé mis en oeuvre par une centrale domotique, et un programme informatique caractérisés en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :
- la figure 1 est une représentation schématique d'un dispositif domotique selon un mode de réalisation conforme à l'invention,
- la figure 2 est un schéma synoptique fonctionnel d'un mode de réalisation d'un procédé conforme à l'invention d'initialisation d'une centrale domotique conforme à l'invention,
- la figure 3 est un schéma synoptique fonctionnel d'un mode de réalisation d'un procédé conforme à l'invention de fonctionnement d'une centrale domotique conforme à l'invention.

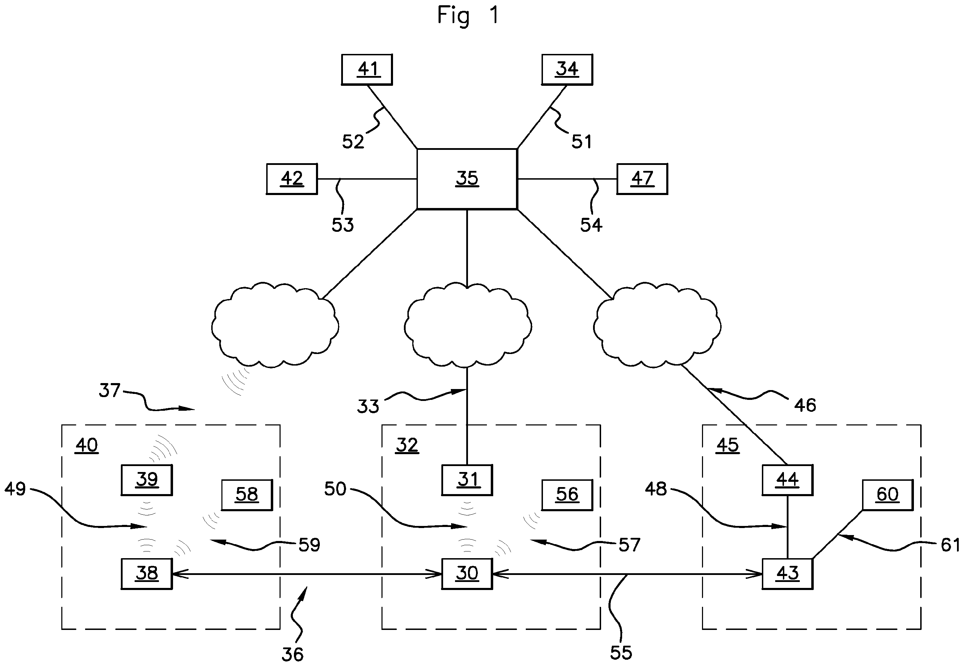

Un dispositif domotique selon l'invention tel que présenté en figure 1 comprend un serveur informatique 35. Un routeur 31 d'un réseau local, dit réseau local principal 32, est relié au serveur informatique 35 par une liaison de communication du réseau Internet. Le routeur 31 fournit donc un accès à l'Internet au réseau local principal 32.

L'ensemble des liaisons et des noeuds (liaison locale 50, routeur 31 et liaison entre ledit réseau principal 32 et le serveur informatique 35) entre ladite centrale principale 30 et le serveur informatique 35 par le réseau local 32 et l'Internet forme ladite liaison principale 33. Ladite liaison principale 33 est par exemple assurée au moins pour partie par une liaison filaire électrique ou optique, par exemple au moins pour partie par une liaison téléphonique, par exemple du type ADSL.

Le réseau local principal 32 comprend une centrale domotique selon l'invention, dite centrale principale 30. Ladite centrale principale 30 est adaptée pour recevoir des signaux domotiques d'au moins un capteur domotique 56 par une liaison de communication sans fil, dite liaison domotique 57.

Ladite centrale principale 30 est reliée au routeur 31 par une liaison de communication, dite liaison locale 50, du réseau local principal 32. Ladite liaison locale 50 est assurée par une liaison de communication de données sans fil, par exemple du type Wi-Fi®.

Ladite centrale principale 30 est reliée à un dispositif d'interface 34 avec un utilisateur, tel qu'un téléphone mobile par exemple, à travers la liaison locale 50, le routeur 31, la liaison principale 33, le serveur informatique 35 et une liaison de télécommunication, dite liaison externe 51, utilisant par exemple au moins pour partie un réseau de télécommunications mobiles, par exemple du type GSM ou GPRS.

Dans un dispositif selon l'invention, avantageusement, de nombreux réseaux locaux 40, 32, 45 sont reliés à travers le réseau Internet audit serveur informatique 35. Ainsi sur la figure 1, deux autres réseaux locaux, dits réseaux voisins 40, 45, sont représentés. Ainsi un premier réseau voisin 40 comprend une centrale domotique selon l'invention, dite centrale voisine 38, reliée par une liaison locale 49 sans fil (Wifi® par exemple) à un routeur 39. Ledit routeur 39 fourni une liaison de communication entre ledit réseau voisin 40 et le serveur informatique 35, à travers le réseau Internet, sans fil par exemple par un réseau de type LTE (4G). L'ensemble des liaisons et des noeuds (liaison locale 49, routeur 39 et liaison entre ledit réseau voisin 40 et le serveur informatique 35) entre ladite centrale voisine 38 et le serveur informatique 35 par le réseau local 40 et l'Internet forme ladite liaison voisine 37.

Ladite centrale voisine 38 est adaptée pour recevoir des signaux domotiques d'au moins un capteur domotique 58 par une liaison de communication sans fil, dite liaison domotique 59.

Ladite centrale voisine 38 est relié à deux dispositifs d'interface 41, 42 avec des utilisateurs, tels qu'un téléphone mobile et une tablette électronique par exemple, à travers la liaison locale 49, le routeur 39, la liaison voisine 37, le serveur informatique 35 et des liaisons externes 52, 53.

De même, un deuxième réseau voisin 45 comprend une centrale domotique selon l'invention, dite centrale voisine 43, reliée par une liaison locale 48 filaire à un routeur 44. Ledit routeur 44 fournit une liaison de communication entre ledit réseau voisin 45 et le serveur informatique 35, à travers le réseau Internet. L'ensemble des liaisons et des noeuds (liaison locale 48, routeur 44 et liaison entre ledit réseau voisin 45 et le serveur informatique 35) entre ladite centrale voisine 43 et le serveur informatique 35 par le réseau local 45 et l'Internet forme ladite liaison voisine 46.

Ladite centrale voisine 43 est adaptée pour recevoir des signaux domotiques d'au moins un capteur domotique 60 par une liaison de communication filaire, dite liaison domotique 61.

Ladite centrale voisine 43 est reliée à un dispositif d'interface 47 avec un utilisateur, tel qu'un téléphone mobile par exemple, à travers la liaison locale 48, le routeur 44, la liaison voisine 46, le serveur informatique 35 et une liaison externe 54.

Par ailleurs, la centrale principale 30 dispose d'une liaison de communication, dite liaison translocale 36, avec la première centrale voisine 38, et d'une liaison translocale 55 avec la deuxième centrale voisine 43. Lesdites liaisons locales 36, 55 sont avantageusement des liaisons de communication de données sans fil. Plus particulièrement lesdites liaisons locales 36, 55 sont avantageusement des liaisons de communication de données sans fil de longue portée de machine à machine. Elles sont par exemple avantageusement basées sur une technologie de télécommunications du type LoRa ™ développée par la société Semtech (Camarillo, Californie, USA) assurant une liaison de communication de portée supérieure à 3km en milieu urbain.

Par ailleurs, si elles sont à portée l'une de l'autre, les deux centrales voisines 38, 43 peuvent elles-mêmes être reliées par une liaison translocale du même type.

Avantageusement la centrale principale 30 comprend une mémoire dans laquelle sont enregistrés des identifiants propres, dits identifiants voisins, de chacune des centrales voisines 38, 43 sous forme de table de routage. Ladite table de routage comprend aussi une valeur de qualité associée à chaque identifiants desdites centrales voisines 38, 43. Ladite valeur de qualité est représentative de la qualité de la liaison translocale 36, 55 entre ladite centrale principale et chacune respectivement des centrales voisines 38, 43. Les identifiants voisins sont rangés par ordre de priorité dans la table de routage en fonction des valeurs de qualité associée à la liaison translocale 36, 55 avec ladite centrale voisine 38, 43 auquel chaque identifiant voisin correspond.

Ladite table de routage de chaque centrale domotique 30, 38, 43 est avantageusement dupliquée dans une mémoire de sauvegarde du serveur informatique 35 ou d'un réseau de serveurs informatiques.

En cas de dysfonctionnement de la liaison principale 33, ou de dysfonctionnement de tout autre élément situé sur une liaison de communication entre ladite centrale principale 30 le serveur informatique 35 comprenant ladite liaison principale 33, par exemple un dysfonctionnement sur le routeur 31 ou un dysfonctionnement sur la liaison locale 50 - assimilés à un dysfonctionnement sur ladite liaison principale 33 dans le cadre de l'invention - la centrale principale 30 communique, notamment échange des données, avec le dispositif d'interface 34 via ladite liaison translocale 36, 55 et ladite centrale voisine 38, 43 dont l'identifiant est classé en premier dans sa table de routage. Si la centrale principale 30 n'arrive pas à établir de liaison de communication avec le serveur informatique 35 à travers le réseau local voisin 40, 45 de la centrale voisine 38, 43 dont l'identifiant est le premier dans sa table de routage, la centrale principale 30 essaie d'établir une communication avec le serveur informatique 35 à travers le réseau local voisin 40, 45 de la centrale voisine 38, 43 dont l'identifiant est classé deuxième dans sa table de routage, et ainsi de suite jusqu'à ce qu'une liaison de communication soit établie avec le serveur informatique 35 ou que la centrale principale 30 parvienne au dernier identifiant de sa table de routage.

Ainsi par exemple, si la liaison translocale 36 avec la centrale voisine 38 est de meilleure qualité que la liaison translocale 55 avec la centrale voisine 43, ladite centrale principale 30 établit préférentiellement une liaison de communication avec le serveur informatique 35 via ladite centrale voisine 38. Néanmoins, si la liaison de communication entre la centrale voisine 38 et le serveur informatique 35 et en dysfonctionnement, notamment si le routeur 39 est hors service ou si la liaison voisine 37 est coupée, la centrale principale 30 tente d'établir une liaison de communication avec le serveur informatique 35 via ladite centrale voisine 43.

Par ailleurs, lorsque la centrale voisine 38 transmet des messages domotiques via ladite liaison translocale 36 à la centrale principale 30 parce que sa liaison de communication comprenant ladite liaison voisine 37 avec le serveur informatique est coupée, la centrale principale 30 transmet lesdites données reçues de la centrale voisine 38 au serveur informatique 35. Cependant, si la liaison principale 33 (ou la liaison locale 50, ou le routeur 31) est aussi en dysfonctionnement, par exemple à cause d'une coupure d'électricité affectant un édifice entier dans lequel sont situées le réseau local principal 32 et le réseau local voisin 40, alors ladite centrale principale 30 retransmet via ladite liaison translocale 55 à la centrale voisine 43 lesdites données reçues de la centrale voisine 38 via la liaison translocale 36. Les données de la centrale voisine 38 effectuent donc, dans ce cas, deux « sauts » de centrale domotique en centrale domotique avant de rejoindre le réseau Internet, le serveur informatique et le cas échéant un dispositif d'interface 41, 42.

Avantageusement, ladite centrale domotique (centrale principale 30 et centrales voisines 38, 43) comprend une batterie lui permettant de continuer à fonctionner, notamment de communiquer par ladite liaison translocale 36, 55, même en l'absence d'alimentation électrique par un réseau d'alimentation électrique.

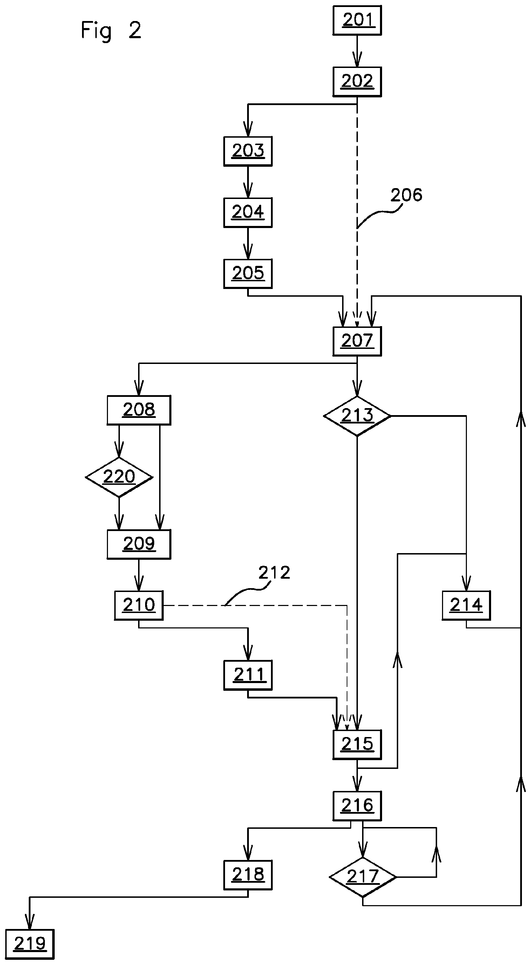

En figure 2, un schéma synoptique fonctionnel d'un procédé mis en oeuvre dans un dispositif domotique selon l'invention tel que présenté avec la figure 1, lors de l'installation de la centrale principale est représenté.

Dans les deux colonnes de droite, sont représentées les opérations effectuées par la centrale principale 30. Dans la troisième colonne en partant de la droite sont représentées les opérations effectuées par le serveur informatique 35. Dans la quatrième colonne en partant de la droite sont représentées les opérations effectuées par une centrale voisine 38, 43. Dans la colonne de gauche, sont représentées les opérations effectuées par le dispositif d'interface 34 de l'utilisateur de la centrale principale 30.

À l'étape 201, la centrale principale 30 est installée dans le réseau local principal 32. Plus particulièrement la centrale principale 30 établit une connexion avec le routeur 31 par une liaison locale 50.

À l'étape 202, la centrale principale 30 établit une liaison de communication avec le serveur informatique 35 via ladite liaison locale 50, le routeur 31 et la liaison principale 33 entre le réseau local principal 32 et le serveur informatique 35. Plus particulièrement la centrale principale 30 émet un message à destination du serveur informatique 35.

Sur réception d'un tel message, à l'étape 203, le serveur informatique 35 établit une géolocalisation de la centrale principale 30 à partir de l'adresse Internet (IP) du réseau local principal 32 ou plus avantageusement à partir d'informations relatives à l'utilisateur principal dudit réseau local principal (en général un abonné dont l'adresse postale est connue d'une base de données clients).

À l'étape 204, le serveur informatique recherche dans une base de données des identifiants de centrales voisines 38, 43 théoriquement situées à portée de la centrale principale 30 par ladite liaison translocale pouvant être établie par la centrale principale 30. À cet effet, le serveur informatique 35 comprend avantageusement en mémoire une valeur correspondant à la portée maximale d'une liaison translocale et la géolocalisation de chacune des centrales domotiques selon l'invention déjà enregistrés dans le serveur informatique 35, notamment des centrales voisines de la centrale principale 30.

À l'étape 205, le serveur informatique 35 émet un message à destination de la centrale principale 30. Ledit message comprend, le cas échéant, des identifiants, dit identifiant voisin, de centrales voisines théoriquement situées à portée de la centrale principale 30 par ladite liaison translocale 36, 55 de ladite centrale principale 30.

Les étapes 203 à 205 sont néanmoins facultatives. Conformément à l'invention la centrale principale peut passer directement de l'étape 202 à l'étape 207 par le lien 206. En particulier la centrale principale 30 peut ignorer les étapes 203 à 205 lorsqu'elle ne dispose pas de liaison principale fonctionnelle avec le serveur informatique 35. La première étape d'un procédé conforme à l'invention peut donc être l'étape 207.

À l'étape 207, la centrale principale 30 émet un signal, dit signal de recherche, via ladite liaison translocale. Ledit signal de recherche comprend toujours au moins un identifiant de ladite centrale principale 30. Ledit identifiant est par exemple une adresse MAC de la centrale principale 30. En outre lorsque le procédé comprend les étapes 203 à 205, le signal de recherche comprend aussi un identifiant d'une centrale voisine, de sorte que ledit signal de recherche et destiné à une unique centrale voisine, par exemple la centrale voisine 38. Lors de la première occurrence de l'étape 207, la centrale principale 30 émet un signal de recherche comprenant le premier identifiant de centrale voisine dans une liste d'identifiants émise par le serveur informatique 35 à l'étape 205.

À l'étape 213, la centrale principale 30 attend la réception d'un signal représentatif d'un accusé de réception d'une centrale voisine 38 à laquelle elle a émis un signal de recherche comprenant l'identifiant de ladite centrale voisine 38. L'étape 213 est donc avantageusement menée lorsque les étapes 203 à 205 ont été mises en oeuvre.

À l'étape 213, si aucun signal représentatif d'un accusé de réception n'a été reçu de ladite centrale voisine 38 après un délai, dit délai d'attente, prédéterminé enregistré dans une mémoire de ladite centrale principale 30, celle-ci passe à l'étape 214.

Si à l'étape 213, un signal représentatif d'un accusé de réception a été reçu de ladite centrale voisine 38 avant la fin dudit délai d'attente, la centrale principale 30 passe à l'étape 215.

À l'étape 214, la centrale principale 30 sélectionne l'identifiant voisin suivant dans la liste d'identifiants voisins que lui a transmis le serveur informatique 35 à l'étape 205, puis réitère l'étape 207 avec ce nouvel identifiant voisin, par exemple celui de la centrale voisine 43.

À l'étape 208, chaque centrale voisine 38, 43 à portée de la centrale principale 30 reçoit ledit signal de recherche émis par celui-ci à l'étape 207. Si le signal de recherche comprend un identifiant voisin, ladite centrale voisine passe à l'étape 220. Si le signal de recherche ne comprend pas d'identifiant voisin, ladite centrale voisine passe directement à l'étape 209.

À l'étape 220, chaque centrale voisine 38, 43 ayant reçu le signal de recherche compare l'identifiant voisin du signal de recherche avec son propre identifiant. Si les deux identifiants diffèrent, la centrale voisine ne fait rien. Si l'identifiant voisin correspond à son propre identifiant, ladite centrale voisine 38, 43 passe à l'étape 209.

À l'étape 209, la centrale voisine 38 enregistre l'identifiant principal de ladite centrale principale 30 puis détermine une valeur, dite valeur de qualité, représentative de la qualité de la liaison translocale 36 entre la centrale principale 30 et lui-même. Le cas échéant, la centrale voisine actualise sa propre table de routage en ajoutant l'identifiant principal de ladite centrale principale 30, classé par ordre de priorité dans sa table de routage en fonction de ladite valeur de qualité.

À l'étape 210, la centrale voisine 38 émet un signal, dit signal d'appairage, comprenant au moins son identifiant ainsi que l'identifiant de la centrale principale 30. Ledit signal d'appairage comprend aussi avantageusement ladite valeur de qualité déterminée à l'étape 209.

Le signal d'appairage émis par la centrale voisine à l'étape 210 est soit émis directement à destination de la centrale principale 30 via ladite liaison translocale 36, ce qui est représenté en figure 2 par le lien 212, soit émis à destination de la centrale principale 30 via ladite liaison voisine 37 et le serveur informatique 35.

Lorsque le signal d'appairage est émis par la centrale voisine 38 via la liaison voisine 37 et le serveur informatique 35, le serveur informatique effectue l'étape 211. À l'étape 211, le serveur informatique 35 ajoute au signal d'appairage une clé de cryptage de la centrale voisine 38, permettant à la centrale principale 30 de transmettre des données à la centrale voisine 38 de façon sécurisée sur ladite liaison translocale 36.

À l'étape 215, la centrale principale 30 mémorise l'identifiant voisin de chaque centrale voisine 38, 43 ayant répondu à son signal de recherche par un signal d'appairage. La centrale principale 30 mémorise aussi, le cas échéant, chaque clé de cryptage de chaque centrale voisine 38, 43 lui ayant répondu en l'associant à l'identifiant de ladite centrale voisine. En outre la centrale principale 30 mémorise aussi la valeur de qualité retournée par chaque centrale voisine 38, 43 en associant l'identifiant de la centrale voisine.

Si à l'étape 207, la centrale principale 30 a seulement émis un signal de recherche comprenant un seul identifiant voisin, la centrale principale 30 passe à l'étape 214 tant qu'elle n'a pas contacté toutes les centrales voisines dont le serveur informatique 35 lui a envoyé la liste à l'étape 205. Si un signal de recherche a été émis pour tous les identifiants voisins que le serveur informatique lui a transmis, ou dans le cas où les étapes 203 à 205 n'ont pas été menées et qu'un signal de recherche général sans identifiant voisin a été émis, la centrale principale 30 passe à l'étape 216.

À l'étape 216, la centrale principale 30 crée une table de routage dans laquelle les identifiants voisins mémorisés lors de l'étape 215 sont ordonnés en fonction de la valeur de qualité qui leur est associée. Ainsi la centrale principale 30 contactera préférentiellement en priorité la centrale voisine 38, 43 disposant de la meilleure qualité de communication sur ladite liaison translocale 36, 55. Puis la centrale principale émet un message d'information au serveur informatique 35 avec pour destinataire un dispositif d'interface 34 d'un utilisateur.

À l'étape 218 le serveur informatique 35 reçoit ledit message d'information via ladite liaison principale 33, enregistre en mémoire la table de routage de la centrale principale, puis transmet ledit message d'information au dispositif d'interface 34 via la liaison externe 51.

À l'étape 219, ledit dispositif d'interface 34 affiche le contenu informatif dudit message d'information sur un écran dudit dispositif d'interface 34.

À l'étape 217, la centrale principale 30 mesure une durée prédéterminée enregistrée en mémoire. Tant que la durée ne s'est pas écoulée la centrale principale ne renouvelle pas sa table de routage. Dès que la durée prédéterminée et écoulée, la centrale principale 30 réitère les étapes 207 à 215 au moins avec les identifiants voisins dont elle dispose en mémoire afin d'actualiser périodiquement sa table de routage. En effet les valeurs de qualité peuvent évoluer dans le temps, et certaines centrales voisines peuvent être désinstallés ou non fonctionnelles et donc disparaître de la table de routage.

Par ailleurs, lorsqu'une nouvelle centrale voisine 38, 43 est installée à portée de la centrale principale 30 par ladite liaison translocale, la centrale principale 30 effectue les étapes 208 à 210 et, notamment, enregistre l'identifiant voisin de la nouvelle centrale voisine 38, 43, et actualise sa table de routage en fonction de la valeur de qualité qu'elle détermine pour la liaison translocale 36, 55 avec cette nouvelle centrale voisine 38, 43.

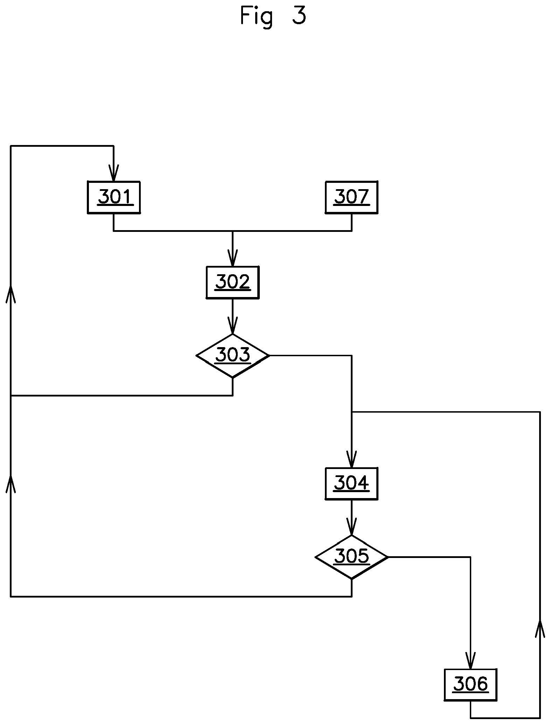

En figure 3, un procédé de fonctionnement conforme à l'invention d'une centrale domotique, dite centrale principale 30, conforme à l'invention est représenté. Celui-ci correspond par exemple à un procédé de fonctionnement d'une centrale domotique d'alarme.

À l'étape 301, la centrale principale 30 est dans un mode de surveillance. Lorsque la centrale principale 30 détecte une anomalie, elle passe à l'étape 302.

À l'étape 302 la centrale principale 30 émet un message domotique qui est un message d'alarme à destination du serveur informatique 35 par la liaison principale 33 puis passe à l'étape 303.

À l'étape 303, la centrale principale surveille la réception d'un signal représentatif d'un accusé de réception du serveur informatique 35 pendant une durée, dite durée d'attente, prédéterminée enregistrée en mémoire. Si la centrale principale 30 reçoit un accusé de réception du serveur informatique avant la fin de ladite durée d'attente, celle-ci revient à l'étape 301.

Si la centrale principale 30 n'a pas reçu d'accusé de réception du serveur informatique 35 à la fin de la durée d'attente, elle passe à l'étape 304.

À l'étape 304, la centrale principale 30 réémet ledit message d'alarme sur ladite liaison translocale 36, 55 à destination de la centrale voisine 38, 43 dont l'identifiant figure en premier dans sa table de routage, c'est-à-dire que la centrale principale 30 émet ledit message d'alarme sur ladite liaison translocale 36, 55 en y associant le premier identifiant voisin de sa table de routage.

À l'étape 305, la centrale principale surveille la réception d'un signal représentatif d'un accusé de réception de la centrale voisine 38, 43 pendant une durée, dite durée d'attente, prédéterminée enregistrée en mémoire. Si la centrale principale 30 reçoit un accusé de réception de la centrale voisine 38, 43 avant la fin de ladite durée d'attente, celle-ci revient à l'étape 301.

Si la centrale principale 30 n'a pas reçu d'accusé de réception de la centrale voisine 38, 43 à la fin de la durée d'attente, elle passe à l'étape 306.

À l'étape 306, la centrale principale 30 choisit dans sa table de routage l'identifiant voisin situé directement après l'identifiant voisin précédemment utilisé à l'étape 304 puis réitère l'étape 304 avec le nouvel identifiant voisin.

Les étapes 304 à 306 peuvent être renouvelées une pluralité de fois pour chaque identifiant voisin enregistré dans la table de routage, c'est-à-dire que la table de routage est parcourue plusieurs fois tant qu'aucun accusé de réception n'a été reçu par ladite centrale principale 30.

À l'étape 307, la centrale principale 30 reçoit un message d'une centrale voisine via ladite liaison translocale. Elle passe alors à l'étape 302 et suit le procédé précédemment décrit.

L'invention peut faire l'objet de nombreuses autres variantes de réalisation non représentées.

En particulier de nombreuses variations d'un procédé selon l'invention peuvent être envisagées tout en restant conformes au procédé défini selon l'invention.

## Revendications

1. Centrale domotique, dite centrale principale (30), adaptée pour :
- recevoir des signaux, dits signaux domotiques, d'au moins un capteur domotique (56),
- traiter lesdits signaux domotiques et produire des données numériques représentatives d'un message, dit message domotique, en fonction desdits signaux domotiques,
- pouvoir émettre ledit message domotique à un dispositif récepteur (35) par une première liaison de communication de données, dite liaison principale (33), comprenant une liaison de communication du réseau Internet, ladite centrale principale appartenant à un premier réseau local, dit réseau local principal (32), de dispositifs électroniques distincts et distants du dispositif récepteur (35), ce réseau local principal disposant d'un accès propre par mot de passe au réseau Internet,
**caractérisée en ce qu'**elle est adaptée pour :
- crypter le corps du message avec une clé dont le dispositif récepteur dispose,
- pouvoir détecter une coupure de ladite liaison principale (33),
- pouvoir établir une liaison de communication de données, dite liaison translocale (36, 55) :
• distincte de la liaison principale (33),
• avec une deuxième centrale domotique, dite centrale voisine (38, 43), ne disposant pas de la clé avec laquelle le corps du message est crypté, la centrale voisine (38, 43) étant adaptée pour pouvoir émettre ledit message domotique audit dispositif récepteur (35), sans lire ni extraire le contenu crypté dudit message domotique, par une deuxième liaison de communication de données, dite liaison voisine (37, 46) comprenant une liaison de communication du réseau Internet, distincte de la liaison principale (33) et de la liaison translocale (36, 55), ladite centrale voisine (38, 43), appartenant à un deuxième réseau local, dit réseau local voisin (40, 45), de dispositifs électroniques distincts et distants du dispositif récepteur (35), ce réseau local voisin disposant d'un accès propre par mot de passe au réseau Internet,
- sur détection d'une coupure de ladite liaison principale (33), pouvoir réémettre ledit message domotique à ladite centrale voisine (38, 43), par ladite liaison translocale (36, 55).

2. Centrale selon la revendication 1, **caractérisée en ce qu'**elle est adaptée pour, sur réception d'un message domotique de ladite centrale voisine (38, 43) par ladite liaison translocale (36, 55), réémettre ledit message domotique par ladite liaison principale (33).

3. Centrale selon l'une des revendications 1 ou 2, **caractérisée en ce qu'**elle est adaptée pour, sur réception d'un message domotique de ladite centrale voisine (38, 43) par ladite liaison translocale (36, 55), et sur détection d'une coupure de ladite liaison principale (33), réémettre ledit message domotique par ladite liaison translocale (36, 55) à une deuxième centrale voisine (38, 43).

4. Centrale selon l'une des revendications 1 à 3, **caractérisée en ce qu'**elle comprend au moins une mémoire adaptée pour pouvoir stocker une pluralité d'identifiants distincts de centrales voisines (38, 43) distinctes.

5. Dispositif domotique comprenant :
- une première centrale domotique, dite centrale principale (30),
- un dispositif électronique, dit dispositif récepteur (35) relié à ladite centrale principale (30) par une première liaison de communication de données, dite liaison principale (33),
- ladite centrale principale (30) appartenant à un premier réseau local, dit réseau local principal (32), de dispositifs électroniques distincts et distants du dispositif récepteur (35), ce réseau local principal disposant d'un accès propre par mot de passe au réseau Internet, ladite liaison principale comprenant une liaison de communication du réseau Internet,
**caractérisé en ce qu'**il comprend une deuxième centrale domotique, dite centrale voisine (38, 43), appartenant à un deuxième réseau local, dit réseau local voisin (40, 45), de dispositifs électroniques distincts et distants du dispositif récepteur (35), ce réseau local voisin disposant d'un accès propre par mot de passe au réseau Internet, ladite liaison voisine comprenant une liaison de communication du réseau Internet,
**en ce que** ledit dispositif récepteur (35) est relié à ladite centrale voisine (38, 43) par une deuxième liaison de communication de données, dite liaison voisine (37, 46), distincte de la liaison principale (33),
**en ce que** ladite centrale principale est selon l'une quelconque des revendications 1 à 4,
et **en ce que** ladite centrale voisine (38, 43) ne dispose pas de la clé avec laquelle le corps du message est cryptée et est adaptée pour :
- pouvoir recevoir, sur ladite liaison translocale (36, 55), ledit message domotique de ladite centrale principale (30),
- pouvoir émettre ledit message domotique audit dispositif récepteur
(35) par ladite liaison voisine (37, 46) sans lire ni extraire le contenu crypté dudit message domotique.

6. Dispositif selon la revendication 5, **caractérisé en ce que** ladite centrale voisine (38, 43) est en outre adaptée pour :
- pouvoir détecter une coupure de ladite liaison voisine (37, 46),
- sur détection d'une coupure de ladite liaison voisine, pouvoir réémettre ledit message domotique à une autre centrale domotique par ladite liaison translocale (36, 55).

7. Dispositif selon l'une des revendications 5 ou 6, **caractérisé en ce que** ladite centrale voisine (38, 43) est en outre adaptée pour :
- recevoir des signaux, dits signaux domotiques, d'au moins un capteur domotique (58, 60), du réseau local voisin,
- traiter lesdits signaux domotiques et produire des données numériques représentatives d'un message, dit message domotique, en fonction desdits signaux domotiques.

8. Dispositif selon l'une des revendications 5 à 7, **caractérisé en ce que**:
- ladite centrale principale est reliée à un routeur d'accès Internet par une liaison locale de ladite liaison principale,
- ladite centrale voisine est reliée à un routeur d'accès Internet par une liaison locale de ladite liaison voisine.

9. Dispositif selon l'une des revendications 5 à 8, **caractérisé en ce que** ladite centrale principale (30) est adaptée pour, sur réception d'un message domotique de ladite centrale voisine (38, 43) par ladite liaison translocale (36, 55), et sur détection d'une coupure de ladite liaison principale (33), réémettre ledit message domotique par ladite liaison translocale (36, 55) à une deuxième centrale voisine (38, 43).

10. Dispositif selon l'une des revendications 5 à 9, **caractérisé en ce que**:
- ladite centrale principale (30) comprend au moins une mémoire dans laquelle est stocké au moins un identifiant, dit identifiant principal, qui lui est propre,
- ladite centrale principale est adaptée pour pouvoir émettre un signal, dit signal de recherche, comprenant ledit identifiant principal, par ladite liaison translocale (36, 55),
- ladite centrale voisine (38, 43) comprend au moins une mémoire dans laquelle est stocké au moins un identifiant, dit identifiant voisin, qui lui est propre,
- ladite centrale voisine est adaptée pour, sur réception dudit signal de recherche, émettre un signal, dit signal d'appairage, comprenant ledit identifiant voisin, par ladite liaison translocale,
- ladite centrale principale est adaptée pour, sur réception dudit signal d'appairage, enregistrer ledit identifiant voisin dans une mémoire.

11. Dispositif selon l'une des revendications 5 à 10, **caractérisé en ce que** ladite liaison translocale (36, 55) est une liaison de communication sans fil.

12. Dispositif selon l'une des revendications 5 à 11, **caractérisé en ce que** ladite liaison translocale (36, 55) est une liaison de communication cryptée.

13. Dispositif selon l'une des revendications 5 à 12, **caractérisé en ce que** le dispositif récepteur est un serveur informatique (35).

14. Dispositif selon la revendication 13, **caractérisé en ce que** ledit serveur informatique (35) est adapté pour pouvoir communiquer par un réseau de télécommunications avec au moins un dispositif d'interface (34, 41, 42, 47) avec un utilisateur humain.

15. Dispositif selon l'une des revendications 13 ou 14, **caractérisé en ce que** :
- ladite centrale principale (30) est adaptée pour pouvoir émettre un premier message, dit message d'inscription, à destination du serveur informatique (35) via ladite liaison principale (33),
- ledit serveur informatique (35) est adapté pour, sur réception dudit message d'inscription, produire et émettre à ladite centrale principale un message en réponse contenant au moins un identifiant, dit identifiant voisin, d'au moins une centrale voisine (38, 43),
- ladite centrale principale est adaptée pour pouvoir émettre, par ladite liaison translocale (36, 55), un signal, dit signal de recherche, comprenant :
• au moins un identifiant, dit identifiant principal, qui lui est propre,
• ledit identifiant voisin.

16. Dispositif selon l'une des revendications 5 à 15, **caractérisé en ce que**, sur réception d'un message domotique par ladite liaison translocale (36, 55), ladite centrale voisine (38, 43) est adaptée pour transmettre audit dispositif récepteur (35), par ladite liaison voisine (37, 46), ledit message domotique uniquement si ledit message domotique est établi selon un protocole, dit protocole translocal domotique, de communication prédéterminé.

17. Dispositif selon l'une des revendications 5 à 16, **caractérisé en ce que** au moins un capteur domotique (56, 58, 60) est choisi parmi : un détecteur incendie, un détecteur de mouvement, notamment un détecteur infrarouge, un détecteur d'ouverture d'ouvrant, un détecteur accélérométrique, un détecteur magnétométrique, une caméra, un microphone, un détecteur de coupure d'alimentation électrique, un détecteur de contact, un détecteur d'eau, un thermomètre, un luxmètre, notamment un capteur photovoltaïque, un détecteur de gaz, notamment un détecteur de monoxyde de carbone, un détecteur de taux de dioxygène, un détecteur de dioxyde de carbone, un détecteur de taux de vapeur d'eau notamment un capteur de taux d'humidité, un détecteur sismique, un détecteur de bris de glace, un détecteur de panne ou de dysfonctionnement d'un dispositif électrique ou mécanique, un médaillon d'appel au secours ou d'assistance, un capteur de consommation d'eau, notamment un compteur d'eau, un capteur de consommation d'électricité, notamment un compteur d'électricité, un capteur de consommation de gaz, notamment un compteur de gaz, un capteur de consommation de carburant, un dispositif de localisation GPS, un tachymètre, un capteur de pression, un anémomètre, un capteur de surveillance d'une personne, notamment un capteur de rythme cardiaque, un capteur de pression sanguine, un capteur de saturation en dioxygène, un capteur de fréquence respiratoire.

18. Procédé mis en oeuvre dans une centrale domotique, dite centrale principale (30), dans lequel ladite centrale principale:
- reçoit des signaux, dits signaux domotiques, d'au moins un capteur domotique (56),
- traite lesdits signaux domotiques et produit des données numériques représentatives d'un message, dit message domotique, en fonction desdits signaux domotiques,
- émet des signaux représentatifs d'un message, dit message domotique, à un dispositif récepteur (35) par une première liaison de communication de données, dite liaison principale (33), comprenant une liaison de communication du réseau Internet, ladite centrale principale appartenant à un premier réseau local, dit réseau local principal (32), de dispositifs électroniques distincts et distants du dispositif récepteur (35), ce réseau local principal disposant d'un accès propre par mot de passe au réseau Internet,
**caractérisé en ce que** ladite centrale principale :
- crypte le corps du message avec une clé dont le dispositif récepteur dispose,
- détecte une coupure de ladite liaison principale (33),
- réémet ledit message domotique sur une liaison de communication de données, dite liaison translocale (36, 55), distincte de la liaison principale (33), à une deuxième centrale domotique, dite centrale voisine (38, 43), ne disposant pas de la clé avec laquelle le corps du message est crypté, la centrale voisine (38, 43) étant adaptée pour pouvoir émettre ledit message domotique audit dispositif récepteur (35) par une deuxième liaison de communication de données, dite liaison voisine (37, 46) comprenant une liaison de communication du réseau Internet, distincte de la liaison principale (33) sans lire ni extraire le contenu crypté dudit message domotique ladite centrale voisine (38, 43), appartenant à un deuxième réseau local, dit réseau local voisin (40, 45), de dispositifs électroniques distincts et distants du dispositif récepteur (35), ce réseau local voisin disposant d'un accès propre par mot de passe au réseau Internet.

19. Procédé selon la revendication 18, **caractérisé en ce que** sur réception d'un message domotique d'une première centrale voisine (38, 43) via ladite liaison translocale (36, 55), et sur détection d'une coupure de ladite liaison principale (33), ladite centrale principale (30) réémet ledit message domotique à une deuxième centrale voisine (38, 43) via ladite liaison translocale (36, 55).

## Patentansprüche

1. Haustechnikzentrale, Hauptzentrale (30) genannt, die dazu angepasst ist:
- Signale, Haustechniksignale genannt, mindestens eines Haustechniksensors (56) zu empfangen,
- die Haustechniksignale zu verarbeiten und digitale Daten, die für eine Nachricht, Haustechniknachricht genannt, stehen, in Abhängigkeit von den Haustechniksignalen zu erzeugen,
- die Haustechniknachricht an eine Empfangsvorrichtung (35) über eine erste Datenkommunikationsverbindung, Hauptverbindung (33) genannt, übertragen zu können, die eine Internet-Kommunikationsverbindung umfasst, wobei die Hauptzentrale zu einem ersten lokalen Netz, lokales Hauptnetz (32) genannt, von elektronischen Vorrichtungen gehört, die sich von der Empfangsvorrichtung (35) unterscheiden und von dieser abgesetzt sind, wobei dieses lokale Hauptnetz über einen eigenen Passwortzugang zum Internet verfügt,
**dadurch gekennzeichnet, dass** sie dazu angepasst ist:
- den Hauptteil der Nachricht mit einem Schlüssel zu verschlüsseln, über den die Empfangsvorrichtung verfügt,
- eine Unterbrechung der Hauptverbindung (33) erfassen zu können,
- eine Datenkommunikationsverbindung, translokale Verbindung (36, 55) genannt, herstellen zu können:
• die sich von der Hauptverbindung (33) unterscheidet,
• mit einer zweiten Haustechnikzentrale, Nachbarzentrale (38, 43) genannt, die nicht über den Schlüssel verfügt, mit dem der Nachrichtenhauptteil verschlüsselt ist, wobei die Nachbarzentrale (38, 43) dazu angepasst ist, die Haustechniknachricht an die Empfangsvorrichtung (35), ohne den verschlüsselten Inhalt der Haustechniknachricht zu lesen oder abzurufen, über eine zweite Datenkommunikationsverbindung, Nachbarverbindung (37, 46) genannt, übertragen zu können, die eine Kommunikationsverbindung des Internets umfasst, die sich von der Hauptverbindung (33) und der translokalen Verbindung (36, 55) unterscheidet, wobei die Nachbarzentrale (38, 43) zu einem zweiten lokalen Netz, lokales Nachbarnetz (40, 45) genannt, von elektronischen Vorrichtungen gehört, die sich von der Empfangsvorrichtung (35) unterscheiden und von dieser abgesetzt sind, wobei dieses lokale Hauptnetz über einen eigenen Passwortzugang zum Internet verfügt,
- auf eine Erfassung einer Unterbrechung der Hauptverbindung (33) hin, die Haustechniknachricht über die translokale Verbindung (36, 55) erneut an die Nachbarzentrale (38, 43) übertragen zu können.

2. Zentrale nach Anspruch 1, **dadurch gekennzeichnet, dass** sie dazu angepasst ist, auf den Empfang einer Haustechniknachricht der Nachbarzentrale (38, 43) über die translokale Verbindung (36, 55) hin, die Haustechniknachricht über die Hauptverbindung (33) erneut zu übertragen.

3. Zentrale nach einem der Ansprüche 1 oder 2, **dadurch gekennzeichnet, dass** sie dazu angepasst ist, auf den Empfang einer Haustechniknachricht der Nachbarzentrale (38, 43) über die translokale Verbindung (36, 55) und auf die Erfassung einer Unterbrechung der Hauptverbindung (33) hin, die Haustechniknachricht über die translokale Verbindung (36, 55) erneut an eine zweite Nachbarzentrale (38, 43) zu übertragen.

4. Zentrale nach einem der Ansprüche 1 bis 3, **dadurch gekennzeichnet, dass** sie mindestens einen Speicher umfasst, der dazu angepasst ist, mehrere verschiedene Kennungen von verschiedenen Nachbarzentralen (38, 43) speichern zu können.

5. Hautechnikvorrichtung, Folgendes umfassend:
- eine erste Haustechnikzentrale, Hauptzentrale (30) genannt,
- eine elektronische Vorrichtung, Empfangsvorrichtung (35) genannt, die über eine erste Datenkommunikationsverbindung, Hauptverbindung (33) genannt, an die Hauptzentrale (30) angeschlossen ist,
- wobei die Hauptzentrale (30) zu einem ersten lokalen Netz, lokales Hauptnetz (32) genannt, von elektronischen Vorrichtungen gehört, die sich von der Empfangsvorrichtung (35) unterscheiden und von dieser abgesetzt sind, wobei dieses lokale Hauptnetz über einen eigenen Passwortzugang zum Internet verfügt, wobei die Hauptverbindung eine Kommunikationsverbindung des Internets umfasst,
**dadurch gekennzeichnet, dass** sie eine zweite Haustechnikzentrale, Nachbarzentrale (38, 43) genannt, umfasst, die zu einem zweiten lokalen Netz, lokales Nachbarnetz (40, 45) genannt, von elektronischen Vorrichtungen gehört, die sich von der Empfangsvorrichtung (35) unterscheiden und von dieser abgesetzt sind, wobei dieses lokale Nachbarnetz über einen eigenen Passwortzugang zum Internet verfügt, wobei die Nachbarverbindung eine Kommunikationsverbindung des Internets umfasst,
dass die Empfangsvorrichtung (35) über eine zweite Datenkommunikationsverbindung, Nachbarverbindung (37, 46) genannt, die sich von der Hauptverbindung (33) unterscheidet, an die Nachbarzentrale (38, 43) angeschlossen ist,
dass die Hauptzentrale nach einem der Ansprüche 1 bis 4 ist,
und dass die Nachbarzentrale (38, 43) nicht über den Schlüssel verfügt, mit dem der Hauptteil der Nachricht verschlüsselt ist, und dazu angepasst ist:
- über die translokale Verbindung (36, 55) die Haustechniknachricht von der Hauptzentrale (30) empfangen zu können,
- die Haustechniknachricht über die Nachbarverbindung (37, 46), ohne den verschlüsselten Inhalt der Haustechniknachricht zu lesen oder abzurufen, an die Empfangsvorrichtung (35) übertragen zu können.

6. Vorrichtung nach Anspruch 5, **dadurch gekennzeichnet, dass** die Nachbarzentrale (38, 43) darüber hinaus dazu angepasst ist:
- eine Unterbrechung der Nachbarverbindung (37, 46) erfassen zu können,
- auf die Erfassung einer Unterbrechung der Nachbarverbindung hin, die Haustechniknachricht über die translokale Verbindung (36, 55) erneut an eine andere Haustechnikzentrale übertragen zu können.

7. Vorrichtung nach einem der Ansprüche 5 oder 6, **dadurch gekennzeichnet, dass** die Nachbarzentrale (38, 43) darüber hinaus dazu angepasst ist:
- Signale, Haustechniksignale genannt, mindestens eines Haustechniksensors (58, 60) des lokalen Nachbarnetzes zu empfangen,
- die Haustechniksignale zu verarbeiten und digitale Daten, die für eine Nachricht, Haustechniknachricht genannt, stehen, in Abhängigkeit von den Haustechniksignalen zu erzeugen.

8. Vorrichtung nach einem der Ansprüche 5 bis 7, **dadurch gekennzeichnet, dass**:
- die Hauptzentrale über eine lokale Verbindung der Hauptverbindung an einen Internet-Zugangsrouter angeschlossen ist,
- die Nachbarzentrale über eine lokale Verbindung der Nachbarverbindung an einen Internet-Zugangsrouter angeschlossen ist.

9. Vorrichtung nach einem der Ansprüche 5 bis 8, **dadurch gekennzeichnet, dass** die Hauptzentrale (30) dazu angepasst ist, auf den Empfang einer Haustechniknachricht der Nachbarzentrale (38, 43) über die translokale Verbindung (36, 55) und auf die Erfassung einer Unterbrechung der Hauptverbindung(33) hin, die Haustechniknachricht über die translokale Verbindung (36, 55) erneut an eine zweite Nachbarzentrale (38, 43) zu übertragen.

10. Vorrichtung nach einem der Ansprüche 5 bis 9, **dadurch gekennzeichnet, dass**:
- die Hauptzentrale (30) mindestens einen Speicher umfasst, in dem mindestens eine Kennung, Hauptkennung genannt, gespeichert ist, die ihr zu eigen ist,
- die Hauptzentrale dazu angepasst ist, ein Signal, Suchsignal genannt, das die Hauptkennung enthält, über die translokale Verbindung (36, 55) übertragen zu können,
- die Nachbarzentrale (38, 43) mindestens einen Speicher umfasst, in dem mindestens eine Kennung, Nachbarkennung genannt, gespeichert ist, die ihr zu eigen ist,
- die Nachbarzentrale dazu angepasst ist, auf den Empfang des Suchsignals hin, ein Signal, Zuordnungssignal genannt, das die Nachbarkennung enthält, über die translokale Verbindung zu übertragen,
- die Hauptzentrale dazu angepasst ist, auf den Empfang des Zuordnungssignals hin, die Nachbarkennung in einem Speicher aufzuzeichnen.

11. Vorrichtung nach einem der Ansprüche 5 bis 10, **dadurch gekennzeichnet, dass** die translokale Verbindung (36, 55) eine drahtlose Kommunikationsverbindung ist.

12. Vorrichtung nach einem der Ansprüche 5 bis 11, **dadurch gekennzeichnet, dass** die translokale Verbindung (36, 55) eine verschlüsselte Kommunikationsverbindung ist.

13. Vorrichtung nach einem der Ansprüche 5 bis 12, **dadurch gekennzeichnet, dass** die Empfangsvorrichtung ein EDV-Server (35) ist.

14. Vorrichtung nach Anspruch 13, **dadurch gekennzeichnet, dass** der EDV-Server (35) dazu angepasst ist, über ein Telekommunikationsnetz mit mindestens einer Schnittstellenvorrichtung (34, 41, 42, 47) mit einem menschlichen Nutzer kommunizieren zu können.

15. Vorrichtung nach einem der Ansprüche 13 oder 14, **dadurch gekennzeichnet, dass**:
- die Hauptzentrale (30) dazu angepasst ist, eine erste Nachricht, Registrierungsnachricht genannt, über die Hauptverbindung (33) an den EDV-Server (35) übertragen zu können.
- wobei der EDV-Server (35) dazu angepasst ist, auf den Empfang der Registrierungsnachricht hin, eine Antwortnachricht zu erzeugen und an die Hauptzentrale zu übertragen, die mindestens eine Kennung, Nachbarkennung genannt, mindestens einer Nachbarzentrale (38, 43) enthält,
- die Hauptzentrale dazu angepasst ist, über die translokale Verbindung (36, 55) ein Signal, Suchsignal genannt, übertragen zu können, das umfasst:
• mindestens eine Kennung, Hauptkennung genannt, die ihr zu eigen ist,
• die Nachbarkennung.

16. Vorrichtung nach einem der Ansprüche 5 bis 15, **dadurch gekennzeichnet, dass** auf den Empfang einer Haustechniknachricht über die translokale Verbindung (36, 55) die Nachbarzentrale (38, 43) dazu angepasst ist, an die Empfangsvorrichtung (35) über die Nachbarverbindung (37, 46) die Haustechniknachricht nur dann zu übertragen, wenn die Haustechniknachricht nach einem vorbestimmten Kommunikationsprotokoll, translokales Haustechnikprotokoll genannt, erstellt ist.

17. Vorrichtung nach einem der Ansprüche 5 bis 16, **dadurch gekennzeichnet, dass** mindestens ein Haustechniksensor (56, 58, 60) ausgewählt ist aus: einem Feuermelder, einem Bewegungsmelder, insbesondere einem Infrarotmelder, einem Öffnungsbewegungsmelder, einem Beschleunigungsmessmelder, einem Magnetmessmelder, einer Kamera, einem Mikrofon, einem Stromversorgungsausfallmelder, einem Kontaktmelder, einem Wassermelder, einem Thermometer, einem Luxmeter, insbesondere einem Photovoltaiksensor, einem Gasmelder, insbesondere einem Kohlenmonoxidmelder, einem Disauerstoffanteilmelder, einem Kohlendioxidmelder, einem Wasserdampfanteilmelder, insbesondere einem Feuchteanteilmelder, einem Erdbebenmelder, einem Glasbruchmelder, einem Pannen- oder Fehlfunktionsmelder für ein elektrisches oder mechanisches Gerät, einem Not- oder Hilferufanhänger, einem Wasserverbrauchsmelder, insbesondere einem Wasserzähler, einen Stromverbrauchsmelder, insbesondere einem Stromzähler, einem Gasverbrauchsmelder, insbesondere einem Gaszähler, einem Brennstoffverbrauchsmelder, einer GPS-Lokalisierungsvorrichtung, einem Tachometer, einem Drucksensor, einem Windmesser, einem Personenüberwachungssensor, insbesondere einem Herzrhythmussensor, einem Blutdrucksensor, einem Disauerstoffsättigungssensor, einem Atemfrequenzsensor.

18. Verfahren, das in einer Haustechnikzentrale, Hauptzentrale (30) genannt, eingesetzt wird, wobei die Hauptzentrale:
- Signale, Haustechniksignale genannt, mindestens eines Haustechniksensors (56) empfängt,
- die Haustechniksignale verarbeitet und digitale Daten, die für eine Nachricht, Haustechniknachricht genannt, stehen, in Abhängigkeit von den Haustechniksignalen erzeugt,
- Signale, die für eine Nachricht, Haustechniknachricht genannt, stehen, an eine Empfangsvorrichtung (35) über eine erste Datenkommunikationsverbindung, Hauptverbindung (33) genannt, überträgt, die eine Internet-Kommunikationsverbindung umfasst, wobei die Hauptzentrale zu einem ersten lokalen Netz, lokales Hauptnetz (32) genannt, von elektronischen Vorrichtungen gehört, die sich von der Empfangsvorrichtung (35) unterscheiden und von dieser abgesetzt sind, wobei dieses lokale Hauptnetz über einen eigenen Passwortzugang zum Internet verfügt,
**dadurch gekennzeichnet, dass** die Hauptzentrale:
- den Hauptteil der Nachricht mit einem Schlüssel verschlüsselt, über den die Empfangsvorrichtung verfügt,
- eine Unterbrechung der Hauptverbindung (33) erfasst,
- die Haustechniknachricht über eine Datenkommunikationsverbindung, translokale Verbindung (36, 55) genannt, die sich von der Hauptverbindung (33) unterscheidet, erneut an eine zweite Haustechnikzentrale, Nachbarzentrale (38, 43) genannt, überträgt, die nicht über den Schlüssel verfügt, mit dem der Hauptteil der Nachricht verschlüsselt ist, wobei die Nachbarzentrale (38, 43) dazu angepasst ist, die Haustechniknachricht an die Empfangsvorrichtung (35) über eine zweite Datenkommunikationsverbindung, Nachbarverbindung (37, 46) genannt, die eine Internetkommunikationsverbindung umfasst, die sich von der Hauptverbindung (33) unterscheidet, ohne den verschlüsselten Inhalt der Haustechniknachricht zu lesen oder abzurufen, übertragen zu können, wobei die Nachbarzentrale (38, 43) zu einem zweiten lokalen Netz, lokales Nachbarnetz (40, 45) genannt, von elektronischen Vorrichtungen gehört, die sich von der Empfangsvorrichtung (35) unterscheiden und von dieser abgesetzt sind, wobei dieses lokale Nachbarnetz über einen eigenen Passwortzugang zum Internet verfügt.

19. Verfahren nach Anspruch 18, **dadurch gekennzeichnet, dass** auf den Empfang einer Haustechniknachricht einer ersten Nachbarzentrale (38, 43) über die translokale Verbindung (36, 55) und auf die Erfassung einer Unterbrechung der Hauptverbindung (33) hin, die Hauptzentrale (30) die Haustechniknachricht über die translokale Verbindung (36, 55) erneut an eine zweite Nachbarzentrale (38, 43) überträgt.

## Claims

1. Home automation centre, called principal centre (30), suitable for:
- receiving signals, called home automation signals, from at least one home automation sensor (56),
- processing said home automation signals and producing digital data representative of a message, called home automation message, in accordance with said home automation signals,
- being able to send said home automation message to a receiving device (35) by a first data communication link, called principal link (33), comprising a communication link of the Internet, said principal centre belonging to a first local network, called principal local network (32), of different electronic devices that are remote from the receiving device (35), this principal local network having its own password access to the Internet,
**characterised in that** it is suitable for:
- encrypting the body of the message with a key possessed by the receiving device,
- being able to detect a break in said principal link (33),
- being able to establish a data communication link, called translocal link (36, 55):
• different from the principal link (33),
• with a second home automation centre, called neighbouring centre (38, 43), not possessing the key wherewith the body of the message is encrypted, the neighbouring centre (38, 43) being suitable for sending said home automation message to said receiving device (35), without reading or extracting the encrypted content of said home automation message, by a second data communication link, called neighbouring link (37, 46) comprising an Internet communication link, different from the principal link (33) and from the translocal link (36, 55), said neighbouring centre (38, 43), belonging to a second local network, called neighbouring local network (40, 45), of different electronic devices that are remote from the receiving device (35), said neighbouring local network having its own password access to the Internet,
- upon detection of a break in said principal link (33), being able to resend said home automation message to said neighbouring centre (38, 43), by said translocal link (36, 55).

2. Centre according to claim 1, **characterised in that** it is suitable, upon reception of a home automation message from said neighbouring centre (38, 43) by said translocal link (36, 55), for resending said home automation message by said principal link (33).

3. Centre according to either one of claims 1 or 2, **characterised in that** it is suitable, upon reception of a home automation message from said neighbouring centre (38, 43) by said translocal link (36, 55), and upon detection of a break in said principal link (33), for resending said home automation message by said translocal link (36, 55) to a second neighbouring centre (38, 43).

4. Centre according to any one of claims 1 to 3, **characterised in that** it comprises at least one memory suitable for storing a plurality of different identifiers of different neighbouring centres (38, 43).

5. Home automation device comprising:
- a first home automation centre, called principal centre (30),
- an electronic device, called receiving device (35) connected to said principal centre (30) by a first data communication link, called principal link (33),
- said principal centre (30) belonging to a first local network, called principal local network (32), of different electronic devices that are remote from the receiving device (35), said principal local network having its own password access to the Internet, said principal link comprising a communication link to the Internet,
**characterised in that** it comprises a second home automation centre, called neighbouring centre (38, 43), belonging to a second local network, called neighbouring local network (40, 45), of electronic devices that are different from and remote from the receiving device (35), said neighbouring local network having its own password access to the Internet, said neighbouring link comprising a communication link to the Internet,
**in that** said receiving device (35) is connected to said neighbouring centre (38, 43) by a second data communication link, called neighbouring link (37, 46), different from the principal link (33),
**in that** said principal centre is in accordance with any one of claims 1 to 4,
and **in that** said neighbouring centre (38, 43) does not possess the key wherewith the body of the message is encrypted and is suitable for:
- being able to receive, on said translocal link (36, 55), said home automation message from said principal centre (30),
- being able to send said home automation message to said receiving device
(35) by said neighbouring link (37, 46) without reading or extracting the encrypted content from said home automation message.

6. Device according to claim 5, **characterised in that** said neighbouring centre (38, 43) is further suitable for:
- being able to detect a break in said neighbouring link (37, 46),
- upon detection of a break in said neighbouring link, being able to resend said home automation message to another home automation centre by said translocal link (36, 55).

7. Device according to one of claims 5 or 6, **characterised in that** said neighbouring centre (38, 43) is further suitable for:
- receiving signals, called home automation signals, from at least one home automation sensor (58, 60), of the neighbouring local network,
- processing said home automation signals and producing digital data representative of a message, called home automation message, in accordance with said home automation signals.

8. Device according to one of claims 5 to 7, **characterised in that**:
- said principal centre is connected to an Internet access router by a local link of said principal link,
- said neighbouring centre is connected to an Internet access router by a local link of said neighbouring link.

9. Device according to one of claims 5 to 8, **characterised in that** said principal centre (30) is suitable, upon reception of a home automation message from said neighbouring centre (38, 43) by said translocal link (36, 55), and upon detection of a break in said principal link (33), for resending said home automation message by said translocal link (36, 55) to a second neighbouring centre (38, 43).

10. Device according to one of claims 5 to 9, **characterised in that**:
- said principal centre (30) comprises at least one memory wherein at least one characteristic identifier is stored, called principal identifier,
- said principal centre is suitable for sending a signal, called search signal, comprising said principal identifier, by said translocal link (36, 55),
- said neighbouring centre (38, 43) comprises at least one memory wherein at least one characteristic identifier is stored, called neighbouring identifier,
- said neighbouring centre, upon reception of said search signal, is suitable for sending a signal, called peering signal, comprising said neighbouring identifier, by said translocal link,
- said principal centre, upon reception of said peering signal, is suitable for recording said neighbouring identifier in a memory.

11. Device according to any one of claims 5 to 10, **characterised in that** said translocal link (36, 55) is a wireless communication link.

12. Device according to any one of claims 5 to 11, **characterised in that** said translocal link (36, 55) is an encrypted communication link.

13. Device according to any one of claims 5 to 12, **characterised in that** the receiving device is a computer server (35).

14. Device according to claim 13, **characterised in that** said computer server (35) is suitable for being able to communicate by a telecommunication network with at least one interface device (34, 41, 42, 47) with a human user.

15. Device according to either one of claims 13 or 14, **characterised in that**:
- said principal centre (30) is suitable for being able to send a first message, called sign-on message, to the computer server (35) via said principal link (33),
- said computer server (35), upon reception of said sign-on message, is suitable for producing and sending to said principal centre a response message containing at least one identifier, called neighbouring identifier, of at least one neighbouring centre (38, 43),
- said principal centre is suitable for sending, by said translocal link (36, 55), a signal, called search signal, comprising:
• at least one characteristic identifier, called principal identifier,
• said neighbouring identifier.

16. Device according to any one of claims 5 to 15, **characterised in that**, upon receipt of a home automation message by said translocal link (36, 55), said neighbouring centre (38, 43) is suitable for transmitting to said receiving device (35), by said neighbouring link (37, 46), said home automation message only if said home automation message is established according to a predetermined communication protocol, called home automation translocal protocol.

17. Device according to any one of claims 5 to 16, **characterised in that** at least one home automation sensor (56, 58, 60) is chosen from among: a smoke detector, a motion detector, particularly an infrared detector, a door or window opening detector, an accelerometric detector, a magnetometric detector, a camera, a microphone, a power failure detector, a contact detector, a water detector, a thermometer, a light meter, particularly a photovoltaic sensor, a gas detector, particularly a carbon monoxide detector, an oxygen level detector, a carbon dioxide detector, a water vapour level detector, particularly a moisture level detector, a seismic detector, a breaking glass detector, a breakdown or malfunction detector of an electrical or mechanical device, a button to call for help or assistance, a water consumption sensor, particularly a water meter, an electricity consumption sensor, particularly in electricity meter, a gas consumption sensor, particularly a gas meter, a fuel consumption sensor, a GPS location device, a tachometer, a pressure sensor, an anemometer, a sensor for monitoring an individual, particularly a heart rate sensor, a blood pressure sensor, an oxygen saturation sensor, a respiration frequency sensor.

18. Method implemented in a home automation centre, called principal centre (30), wherein said principal centre:
- receives signals, called home automation signals, from at least one home automation sensor (56),
- processes said home automation signals and produces digital data representative of a message, called home automation message, in accordance with said home automation signals,
- sends signals representative of a message, called home automation message, to a receiving device (35) by a first data communication link, called principal link (33), comprising a communication link to the Internet, said principal centre belonging to a first local network, called principal local network (32), of electronic devices that are different from and remote from the receiving device (35), said principal local network having its own password access to the Internet,
**characterised in that** said principal centre:
- encrypts the body of the message with a key possessed by the receiving device,
- detects a break in said principal link (33),
resends said home automation message on a data communication link, called translocal link (36, 55), different from the principal link (33), to a second home automation centre, called a neighbouring centre (38, 43), that does not possess the key with which the body of the message is encrypted, the neighbouring centre (38, 43) being suitable for sending said home automation message to said receiving device (35) by a second data communication link, called neighbouring link (37, 46) comprising a communication link to the Internet, different from the principal link (33) without reading or extracting the encrypted content of said home automation message, said neighbouring centre (38, 43) belonging to a second local network, called a neighbouring local network (40, 45), of electronic devices that are different from and remote from the receiving device (35), said neighbouring local network having its own password access to the Internet.

19. Method according to claim 18, **characterised in that**, upon reception of a home automation message from a first neighbouring centre (38, 43) via said translocal link (36, 55), and upon detection of a break in said principal link (33), said principal centre (30) resends said home automation message via said translocal link (36, 55) to a second neighbouring centre (38, 43).
